# EUROPEAN PATENT APPLICATION

(11) **EP 2 618 251 A1**
(43) Date of publication of application: **24.07.2013**
(21) Application number: 11825086.9
(22) Date of filing: 09.09.2011
(51) Int. Cl.: G06F 3/12, B41J 29/00, B41J 29/38, G03G 21/00, G03G 21/02, H04N 1/00

(54) **ACCOUNTING MANAGEMENT SYSTEM**

(30) Priority: 13.09.2010 JP 2010204508
(71) Applicant: Konica Minolta Business Technologies, Inc., Tokyo 100-0005 (JP)
(72) Inventor: NAKAMURA, Mitsunori, Hino-shi Tokyo 191-8511 (JP)
(74) Representative: HOFFMANN EITLE
(86) International application number: PCT/JP2011/070595
(87) International publication number: WO 2012/036083

(57) **Abstract**

An account management system includes an account management device (200), and an image forming device (500) connected to the account management device (200) via a network. The image forming device (500) includes execution means for executing an image formation operation, and notification means for transmitting to the account management device (200) a completion notification indicating that an image formation operation by the execution means is completed. The account management device (200) includes an account management unit (202) responding to reception of the completion notification for generating account information about the image formation operation corresponding to the completion notification.

## Description

### TECHNICAL FIELD

The present invention relates to an account management system, particularly, an account management system including an account management device, and at least one image processing device connected to the account management device via a network.

### BACKGROUND ART

Conventionally, there are various systems, directed to a user utilizing a processing device on a network, to monitor the usage contents of the processing device through another device, and charging the user through that another device, based on the usage contents.

For example, PTL 1 (Japanese Laid-Open Patent Publication No. 2007-47982) discloses an information processing device for monitoring, when the identification information of a first user is input and a second user utilizes the information processing device, such that the usage contents related to the relevant usage is given as the usage contents of the first user.

Further, PTL 2 (Japanese Laid-Open Patent Publication No. 2009-64234) discloses the approach of aggregating the number of times a service has been utilized at a device on a network through a device of the provider of that service, and enabling recovery of the count value at the device providing the service even in the case where communication error occurs.

### CITATION LIST

### PATENT LITERATURE

PTL 1: Japanese Laid-Open Patent Publication No. 2007-47982
PTL 2: Japanese Laid-Open Patent Publication No. 2009-64234

### SUMMARY OF INVENTION

### TECHNICAL PROBLEM

According to the aforementioned conventional approach, the aforementioned another device and the device of the service provider settling the account could charge for the usage according to the amount indicated in the received notification of the service offered at the processing device or the like that is the source of the service provider. However, confirmation of whether the usage is true or not was not possible. In another words, in the case where the administrator of the charging source and the administrator of the service provider differ, any illegal notification of the usage contents of the service from the service provider to the charging source (for example, a false notification of the service being offered even if the service was not actually carried out) could not be recognized at the charging source, which may lead to the event of charging the user according to the usage contents that was notified wrongly.

The present invention is directed to such a problem, and an object is to provide an account management system that allows a charging source to charge for a service according to the contents of service actually offered by the service provider.

### SOLUTION TO PROBLEM

An account management system according to the present invention includes an account management device, and an image forming device connected to the account management device via a network. The image forming device includes an execution unit for executing an image formation operation, and a notification unit for transmitting to the account management device a completion notification indicating that the image formation operation by the execution unit is completed. The account management device includes an account management unit responding to reception of the completion notification for generating account information about the image formation operation corresponding to the completion notification.

Preferably, the completion notification includes an amount of operation about the image formation operation, and information identifying a user designating the image formation operation. The account management device generates the account information for the user identified by the completion notification.

Preferably, the account management system further includes an application server for transmitting designation of an image formation operation to the image forming device. The application server includes a transmission unit for transmitting to the account management device identification information identifying an image formation operation transmitted to the image forming device. The account management device further includes a reception unit receiving the identification information. The account management unit generates the account information on a condition that the completion notification is received from the image forming device before a predetermined time has elapsed since the identification information was received from the application server.

Preferably, the account management unit responds to the reception unit receiving the identification information to request the image forming device to transmit the completion notification corresponding to the identification information.

Preferably, the account management unit requests the image forming device to transmit the completion notification corresponding to the identification information on a condition that a certain time shorter than the predetermined time has elapsed since the reception unit received the identification information.

Preferably, the identification information includes information identifying a standby time. The account management unit requests the image forming device to transmit the completion notification corresponding to the identification information on a condition that the standby time has elapsed since the reception unit received the identification information.

Preferably, the image forming device includes an inquiry unit for inquiring, when the designation is received, the account management device about validity of an image formation operation identified by the designation. The account management device includes a verification unit responding to an inquiry from the inquiry unit for determining validity by verifying the image formation operation identified by the designation and the identification information received from the application server, and transmitting the determination result to the image forming device. The execution unit executes the image formation operation identified by the designation on a condition that the determination result by the verification unit indicates that the image formation operation identified by the designation is valid.

Preferably, the image forming device further includes an input unit for accepting input of information. The inquiry unit requests input of predetermined information at the input unit when the determination result by the verification unit does not indicate that the image formation operation identified by the designation is valid.

Preferably, the notification unit transmits the completion notification to the account management device every time a predetermined number of image formation operations are completed by the execution unit.

Preferably, the notification unit transmits the completion notification to the account management device at every elapse of a specified time.

Preferably, the account management system further includes an application server for accepting a request of an image formation operation from a user. The account management device is connected to a plurality of image forming devices. The account management device stores an attribute for each user; stores for each image forming device, first information identifying a user that can use a relevant image forming device, and second information identifying an attribute allowing usage of the relevant image forming device; and notifies the application server about an image forming device identified as being available to a relevant user in the first information and an image forming device identified as being available to the attribute of the relevant user in the second information, as an image forming device available to the user.

Preferably, the application server stores the second information. The account management device receives the second information from the application server.

### ADVANTAGEOUS EFFECTS OF INVENTION

According to an account management system of the present invention, a charging source can charge for a service according to contents of a service actually offered by the service provider.

### BRIEF DESCRIPTION OF DRAWINGS

Fig. 1 schematically represents a structure of an embodiment of an account management system of the present invention.
Fig. 2 is a hardware block diagram of the account management server of Fig. 1.
Fig. 3 is a control block diagram of the account management server of Fig. 1.
Fig. 4 is a hardware block diagram of the application server of Fig. 1.
Fig. 5 is a control block diagram of the application server of Fig. 1.
Fig. 6 is a hardware block diagram of the client terminal of Fig. 1.
Fig. 7 is a control block diagram of the client terminal of Fig. 1.
Fig. 8 is a hardware block diagram of the MFP (Multi Functional Peripherals) of Fig. 1.
Fig. 9 is a control block diagram of the MFP of Fig. 1.
Fig. 10 is a sequence diagram for describing the operation timing of each element in the account management system of Fig. 1.
Fig. 11 is a flowchart of the process executed at an account management server in the account management system of Fig. 1.
Fig. 12 is a flowchart of the process executed at the application server of Fig. 1.
Fig. 13 is a flowchart of the process executed at the MFP of Fig. 1.
Fig. 14 is a sequence diagram to describe an operation timing of each element in an account management system according to an embodiment of the present invention.
Fig. 15 is a control block diagram of an account management server according to an embodiment of the present invention.
Fig. 16 is a flowchart of the process executed by the account management server of Fig. 15.
Fig. 17 is a flowchart of the process at an MFP according to an embodiment of the present invention.
Fig. 18 schematically represents an entire structure of an account management system according to an embodiment of the present invention.
Fig. 19 is a timing chart of the process executed at each element in an account management system according to an embodiment of the present invention.
Fig. 20 is a control block diagram of an account management server according to an embodiment of the present invention.
Fig. 21 is a flowchart of the process executed by an account management server according to the present embodiment of the present invention.
Fig. 22 is a flowchart of the process executed by an application server according to an embodiment of the present invention.
Fig. 23 is a flowchart of the process at an MFP according to an embodiment of the present invention.
Fig. 24 schematically represents an entire structure of an account management system according to an embodiment of the present invention.
Fig. 25 is a timing chart of the process executed at each element in an account management system according to an embodiment of the present invention.
Fig. 26 is a flowchart of the process executed by an account management server according to an embodiment of the present invention.
Fig. 27 is a flowchart of the process executed by an application server according to an embodiment of the present invention.
Fig. 28 is a flowchart of the process at an MFP according to an embodiment of the present invention.
Fig. 29 is a control block diagram of an account management server according to an embodiment of the present invention.
Fig. 30 is a control block diagram of an MFP according to an embodiment of the present invention.
Fig. 31 is a flowchart of the process corresponding to confirming validity of a print job from an MFP according to an embodiment of the present invention.
Fig. 32 is a flowchart of the process executed by the MFP of Fig. 30.
Fig. 33 is a timing chart of the process executed by each element in an account management system according to an embodiment of the present invention.
Fig. 34 is a control block diagram of an account management server according to an embodiment of the present invention.
Fig. 35 is a control block diagram of an application server according to an embodiment of the present invention.
Fig. 36 is a flowchart of the process at an account management server according to an embodiment of the present invention.
Fig. 37 is a flowchart of the process at an application server according to an embodiment of the present invention.
Fig. 38 schematically represents a list of MFPs according to an embodiment of the present invention.
Fig. 39 schematically represents a structure of a modification of an account management system according to an embodiment of the present invention.

### DESCRIPTION OF EMBODIMENTS

Embodiments of the present invention will be described hereinafter with reference to the drawings. In the following description, the same components and structural elements have the same reference character allotted. Their designation and function are also identical.

### <First Embodiment>

### [1. Structure of Account Management System]

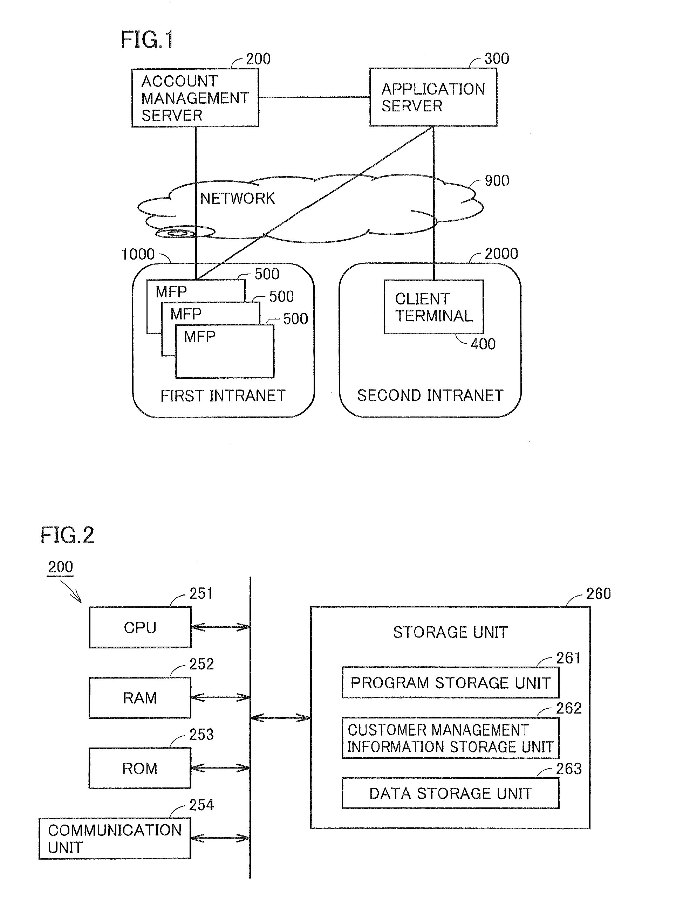

Fig. 1 schematically represents a structure according to an embodiment of an account management system of the present invention.

A network system of the present embodiment is constituted of an account management server 200, an application server 300, a client terminal 400, and at least one MFP 500. These elements are connectable via a network 900. Account management server 200, application server 300, MFP 500, and client terminal 400 are configured to allow communication via network 900.

MFP 500 is present in a first intranet 1000. Application server 300 and MFP 500 are present on the same intranet. Client terminal 400 is present in a second intranet 2000.

In the present embodiment, account management server 200 constitutes an account management device, and MFP 500 constitutes an image forming device.

In the present embodiment, account management server 200 and application server 300 may be present in first intranet 1000 or second intranet 2000. Moreover, account management server 200 and application server 300 may be formed of the same device.

MFP 500 may be present in the same intranet as client terminal 400. In this case, some of a plurality of MFPs 500 present in first intranet 1000 of the present embodiment may be present in first intranet 1000 while the remaining MFP 500 may be present in second intranet 2000 likewise with client terminal 400. Alternatively, all MFPs 500 may be present in the same intranet as client terminal 400.

Client terminal 400 may be configured to allow communication with MFP 500 via a network such as the Internet. In other words, client terminal 400 may be present on a public communication channel such as the Internet. MFP 500 may also be present on a public communication channel.

### [2. Structure of Account Management Server]

Fig. 2 is a hardware block diagram of account management server 200.

Referring to Fig. 2, account management server 200 includes a CPU (Central Processing Unit) 251 constituted of an operational device providing overall control of the operation of the relevant server, a RAM (Random Access Memory) 252, a ROM (Read Only Memory) 253, a communication unit 254, and a storage unit 260. Storage unit 260 is formed of a storage device such as a hard disk, or the like. Storage unit 260 may be constituted of a removable medium such as a USB (Universal Serial Bus) memory that is detachable to account management server 200. Communication unit 254 is constituted of, for example, a network communication device such as a LAN (Local Area Network) card, a LAN adapter, or the like. Account management server 200 is connected to network 900 via communication unit 254.

Storage unit 260 includes a program storage unit 261 storing a program to be executed by CPU 251, a customer management information storage unit 262 storing customer management information, and a data storage unit 263 storing various data for execution of the program.

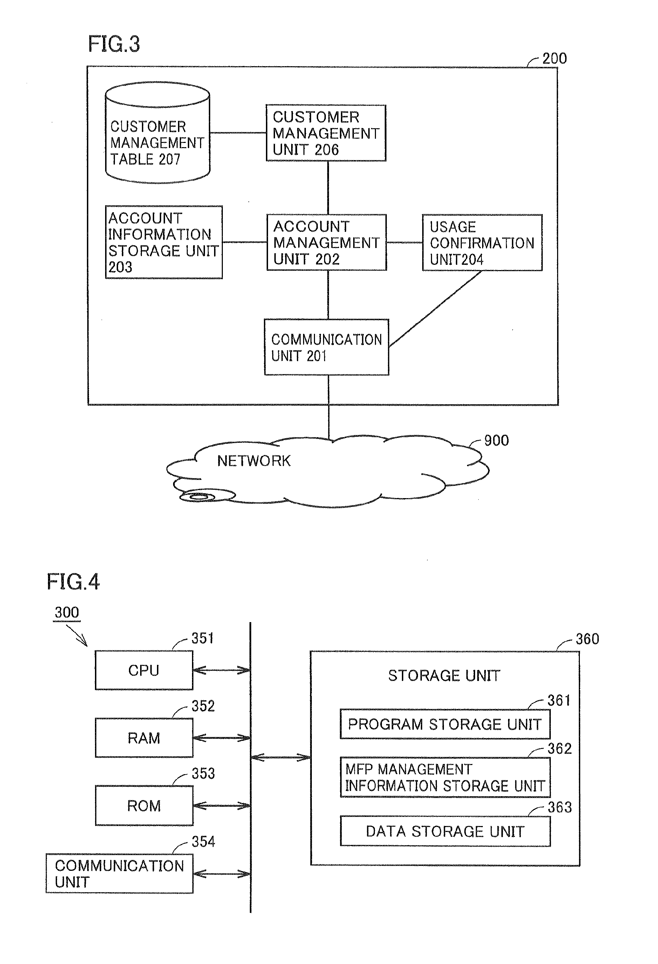

Fig. 3 is a control block diagram of account management server 200.

Referring to Fig. 3, account management server 200 includes, as a functional element, a communication unit 201, an account management unit 202, an account information storage unit 203, a usage confirmation unit 204, a customer management unit 206, and a customer management table 207. Communication unit 201 is implemented by communication unit 254.

Account management unit 202, account information storage unit 203, and usage confirmation unit 204 may be implemented by CPU 251 executing a predetermined program in program storage unit 261, or may be implemented by hardware such as a dedicated LSI (Large Scale Integration). Account information storage unit 203 and customer management table 207 may be implemented by customer management information storage unit 262.

Account information storage unit 203 and/or customer management table 207 does not necessarily have to be provided in account management server 200. The account management system may be configured to have, as necessary, these elements provided at another server, such that account management unit 202 and/or customer management unit 206 refers to and updates these elements.

Account information storage unit 203 has account information on the usage of MFP 500 stored for every job, for example. Table 1 represents an example of account information stored in account information storage unit 203.

**Table 1**

| Print Job ID | Customer ID | Used MFP ID | Date of Usage | Usage Contents | Usage Completion Flag | Date of Confirmation |
|---|---|---|---|---|---|---|
| J011 | U001 | MFP001 | 2010/4/7 9:30 | A4 color-12 copies | confirmed | 2010/4/7 9:32 |
| J012 | U003 | MFP001 | 2010/4/7 10:54 | A4 monochrome 8 copies | unconfirmed | N/A |
| J013 | U004 | MFP005 | 2010/4/7 16:15 | A4 color-35 copies | confirmed | 2010/4/7 16:24 |
| J014 | U006 | MFP003 | 2010/4/8 11:29 | A3 color-5 copies | confirmed | 2010/4/8 11:35 |
| J015 | U007 | MFP005 | 2010/4/8 18:07 | A4 monochrome 5 copies | unconfirmed | N/A |

Referring to Table 1, the account information includes each print job ID, a user (customer) ID that is a subject of charging for the print job, an ID of MFP 500 used in the print job, the date of usage, the contents used in the print job, information (flag) indicating whether usage of MFP 500 has been completed or not in the relevant print job, and the date when the process of confirming completion of the usage is carried out by account management server 200, all stored in association with each other for each print job.

Customer management table 207 stores information for monitoring the customer that is the charging party for the process executed by MFP 500. An example of the stored information is shown in Table 2.

**Table 2**

| Customer ID | Contractant |
|---|---|
| U001 | A Corporation Department E |
| U002 | A Corporation Department F |
| U003 | A Corporation Department G |
| U004 | B Corporation Department J |
| U005 | B Corporation Department K |
| U006 | C Corporation Department P |
| U007 | C Corporation Department Q |

Referring to Table 2, the customer management table has information identifying a customer (customer ID) and the name of each customer (contractant) stored in association with each other. The storing form of the relevant information in account management server 20 is not particularly limited to a table format.

### [3. Structure of Application Server]

Fig. 4 is a hardware block diagram of application server 300.

Referring to Fig. 4, application server 300 includes a CPU 351 constituted of an operational device providing overall control of the operation of the relevant server, a RAM 352, a ROM 353, a communication unit 354, and a storage unit 360. Storage unit 360 is formed of a storage device such as a hard disk. Storage unit 360 may be constituted of a removable medium such as a USB memory that is detachable to application server 300. Communication unit 254 is constituted of a network communication device such as a LAN (Local Area Network) card, an LAN adapter, or the like. Application server 300 is connected to a network 900 via communication unit 254.

Storage unit 260 includes a program storage unit 261 storing a program to be executed by CPU 251, a customer management information storage unit 262 storing customer management information, and data storage unit 263 storing various data for execution of the program.

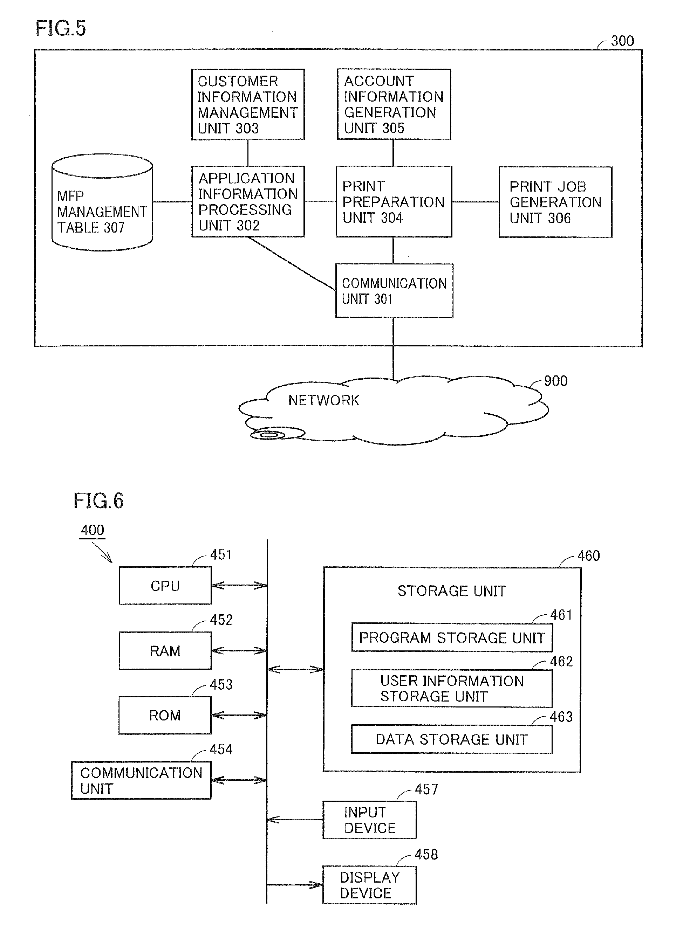

Fig. 5 is a control block diagram of application server 300.

Referring to Fig. 5, application server 300 includes, as a functional element, a communication unit 301, an application information processing unit 302, a customer information management unit 303, a print preparation unit 304, an account information generation unit 305, a print job generation unit 306, and an MFP management table 307. Communication unit 301 is implemented by communication unit 354.

Application information processing unit 302, print preparation unit 304, account information generation unit 305, and print job generation unit 306 each may be implemented by CPU 351 executing a predetermined program in program storage unit 361, or may be implemented by hardware such as a dedicated LSI. Customer information management unit 303 and MFP management table 307 are implemented by data storage unit 363.

MFP management table 307 stores information for identifying each of a plurality of MFPs 500 in the system. An example of the contents of the relevant information is shown in Table 3.

**Table 3**

| MFP ID | Machine Type | Serial Number | IP Address or URL |
|---|---|---|---|
| P001 | MFP 100 | 161464 | 101.10.2.256 |
| P002 | MFP 100 | 636451 | mfp636451.konicaminolta.com |
| P003 | MFP 120 | 350054 | mfp350054.konicaminoita.com |
| P004 | MFP 210 | 245898 | 80.57.148.3 |
| P005 | MFP 210 | 465759 | mfp465759.konicaminolta.com |
| P006 | MFP 120 | 348790 | 216.194.39.22 |
| P007 | MFP 110 | 546323 | mfp546323.konicaminolta.com |

Referring to Table 3, MFP management table 307 includes an MFPID identifying each MFP 500, a machine type that is information identifying the machine model of each MFP 500, a serial number for identifying each of MFPs 500, and an IP address or mail address on network 900 for each MFP 500, all stored in association with each other. At application server 300, only information for indicating association therebetween is required to be stored. The storing form of the relevant information is not limited to a table format.

Customer information management unit 303 has information for monitoring each customer stored. An example of the contents of the relevant information is shown in Table 4.

**Table 4**

| Customer ID | Password | Log-In State | Log-In Date |
|---|---|---|---|
| U001 | dsH4JdIsd | not used | 2010/4/5 16:45 |
| U003 | Da3dkJ11O | currently used | 2010/4/6 17:28 |
| U004 | POIqwJ | currently used | 2010/4/7 12:58 |
| U006 | BgvbfV9nK | not used | 2010/4/6 8:43 |
| U007 | asJKL5es2d | currently used | 2010/4/6 11:06 |

Referring to Table 4, customer information management unit 303 includes, for each customer ID, a password to be input by the user to verify being the relevant customer, a log in state indicating whether the relevant customer is logged into any of MFP 500, a log in date indicating the time of logging in for the relevant customer, all stored in association with each other. At application server 300, only information for indicating association therebetween is required to be stored. The storing form of the relevant information is not limited to a table format.

### [4. Structure of Client Terminal]

Fig. 6 is a hardware block diagram of client terminal 400.

Referring to Fig. 6, client terminal 400 includes a CPU 451 constituted of an operational device providing overall control of the operation of the relevant server, a RAM 452, a ROM 453, a communication unit 454, a storage unit 460, an input device 457, and a display device 458. Client terminal 400 may be implemented by, for example, a general-purpose personal computer.

Storage unit 460 is constituted of a storage device such as a hard disk. Storage unit 460 may be constituted of a removable medium such as a USB memory that is detachable to client terminal 400. Communication unit 454 is formed of a network communication device such as a LAN card, a LAN adapter, or the like.

Storage unit 460 includes a program storage unit 461 for storing a program to be executed by CPU 451, a user information storage unit 462 that is information of the user of client terminal 400, and a data storage unit 463 storing various data for executing the program.

Display device 458 is constituted of a liquid crystal display device. Input device 457 serves to enter information outside of client terminal 400, and is formed of a hard key, for example. Input device 457 may be constituted of a touch panel formed integrally with display device 458, or may be formed by both a touch panel and hard key.

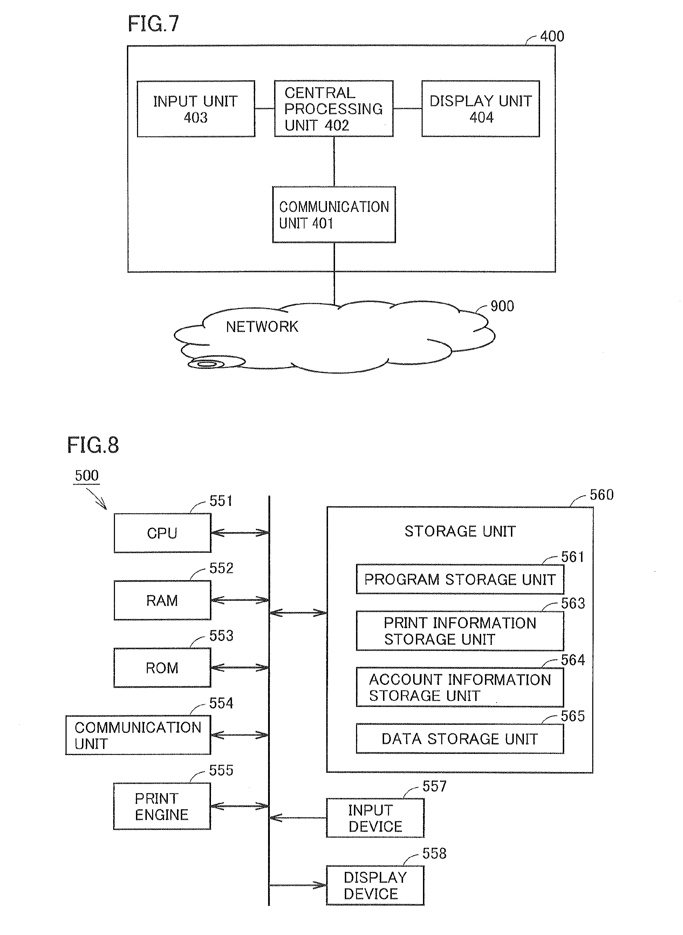

Fig. 7 is a control block diagram of client terminal 400.

Referring to Fig. 7, client terminal 400 includes, as a functional element, a communication unit 401, a central processing unit 402, an input unit 403, and a display unit 404. Communication unit 401 is implemented by communication unit 454. Client terminal 400 is connected onto network 900 via communication unit 454.

Input unit 403 is constituted of input device 457. Display unit 404 is constituted of display device 458.

Central processing unit 402 generates, for MFP 500 and/or application server 300, information designating execution of a print job, based on the information input at input unit 403, and transmits the information to MFP 500 and/or application server 300 via communication unit 401. Central processing unit 402 is configured by CPU 451 executing a program stored in program storage unit 461.

### [5. Structure of MFP]

Fig. 8 is a hardware block diagram of MFP 500.

Referring to Fig. 8, MFP 500 includes a CPU 551 constituted of an operational device providing overall control of the operation of the relevant server, a RAM 552, a ROM 553, a communication unit 554, a storage unit 560, a print engine 555, an input device 557, and a display device 558.

Storage unit 560 is constituted of a storage device such as a hard disk. Storage unit 560 may be constituted of a removable medium such as a USB memory that is detachable to MFP 500. Communication unit 554 is constituted of a network communication device such as a LAN card, a LAN adapter, or the like.

Storage unit 560 includes a program storage unit 561 storing a program to be executed by CPU 551, a print information storage unit 563 storing information to identify the contents of each job, an account information storage unit 564 storing account information for each job, and a data storage unit 565 storing various data for execution of the program.

Print engine 555 is a device directed to realizing a print function at MFP 500, and is constituted of an image formation unit including a photoreceptor drum, or the like.

Display device 558 is constituted of a liquid crystal display device. Input device 557 serves to enter information outside of MFP 500, and is formed of a hard key, for example. Input device 557 may be constituted of a touch panel formed integrally with a display device 558, or may be formed by both a touch panel and hard key.

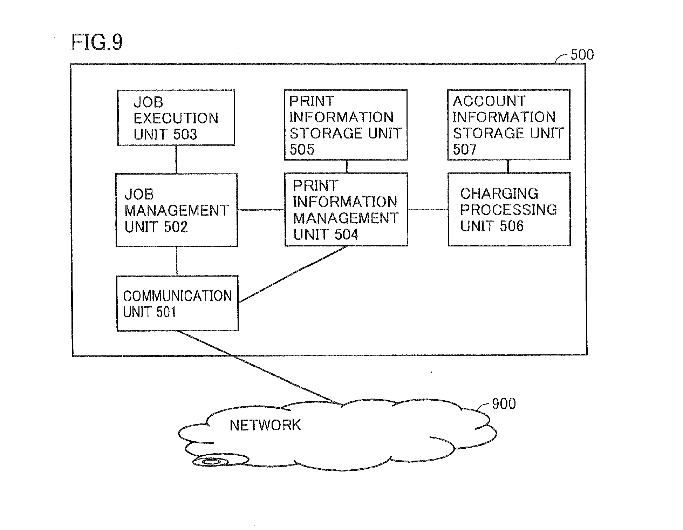

Fig. 9 is a control block diagram of MFP 500.

Referring to Fig. 9, MFP 500 includes, as a functional element, a communication unit 501, a job management unit 502, a job execution unit 503, a print information management unit 504, a print information storage unit 505, a charging processing unit 506, and an account information storage unit 507. Communication unit 501 is implemented by communication unit 554. MFP 500 is connected onto network 900 via communication unit 554.

Job execution unit 503 is implemented by print engine 555 executing an image formation operation. MFP 500 is an example of an image processing device according to the present invention.

Job management unit 502 monitors execution of job at MFP 500 (job execution timing, operation control of job execution unit 503, and the like). Job management unit 502 receives a print job from application server 300 via communication unit 501. Job management unit 502 extracts a job ID and usage mode from the print job, and notifies print information management unit 504 about the same together with a reception date (time of receiving the print job). Job management unit 502 calculates the usage contents from the print job (number of printouts or printing fee), and notifies print information management unit 504 about the same.

Print information management unit 504 stores the print job ID, reception date, print completion flag (initially, set as "uncompleted"), and the print contents as the print information in print information storage unit 505.

Print information storage unit 505 stores print information related to a job executed at MFP 500. Table 5 shows an example of the print information.

**Table 5**

| Print Job ID | Used MFP ID | Usage Contents | Reception Date | Print Completion Flag | Date of Confirmation | Usage Mode |
|---|---|---|---|---|---|---|
| J007 | MFP005 | A4 color 25 copies | 2010/4/5 17:23 | completed | 2010/4/5 17:33 | network |
| J009 | MFP005 | A4 monochrome 11 copies | 2010/4/6 20:01 | completed | 2010/4/6 20:05 | network |
| J013 | MFP005 | A3 color 8 copies | 2010/4/7 16:15 | completed | 2010/4/7 16:24 | local |
| J015 | MFP005 | A4 color 18copies | 2010/4/8 18:07 | uncompleted | N/A | network |

Referring to Table 5, the print information includes a print job ID identifying each print job, an ID of the MFP executing the relevant print job (used MFPID), the usage contents of the resource by the relevant print job, the time when the relevant print job is received, a flag indicating whether the printing is completed or not (print completion flag), and the date of confirmation (described afterwards), and the usage mode, all stored in association with each other. At MFP 500, only information for indicating association therebetween is required to be stored. The storing form of the relevant information is not limited to a table format.

As used herein, the usage mode indicates the obtained path of the relevant print job, indicated as "local" when obtained from a device in first intranet 1000, and indicated as "network" when obtained via network 900. A job receives from application server 300 is set as "network".

Print information management unit 504 modifies the print completion flag in the print information to "completed" when the print job is completed, and notifies charging processing unit 506 about the print information corresponding to the print job ID already completed. Upon receiving a notification, charging processing unit 506 generates and stores the account information for a relevant job at account information storage unit 507, only when the usage mode of the completed print job is "local".

Job management unit 502, print information management unit 504, and charging processing unit 506 each may be implemented by CPU 551 executing a predetermined program, or may be implemented by hardware such as a dedicated LSI or the like. Print information storage unit 505 is implemented by print information storage unit 563. Account information storage unit 507 is implemented by account information storage unit 564.

### [6. Processing at Account Management System]

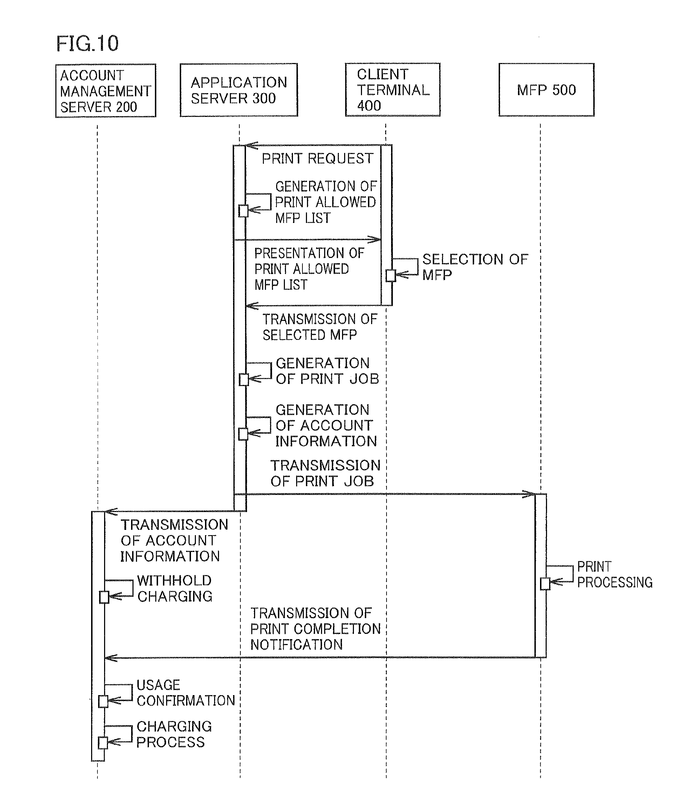

Fig. 10 is a sequence diagram to describe an operation timing of each element in the account management system of the present embodiment.

Referring to Fig. 10, in response to a print request transmitted from client terminal 400 to application server 300, application server 300 determines whether printing by the relevant print request is allowed or not, and presents, when a determination of printing being allowed is made, an MFP list to client terminal 400. In response, client terminal 400 transmits information selecting an MFP from the list to application server 300. In response, application server 300 generates a print job based on the print request, and generates account information for the print job. Application server 300 transmits the print job to the selected MFP 500, and transmits the account information to account management server 200.

Account management server 200 withholds the account information received from application server 300 until a print completion notification is received from MFP 500. MFP 500 executes a print process according to the print job received from application server 300, and transmits a print completion notification, when the print process is completed, notifying completion to account management server 200.

Account management server 200 responds to reception of a print management notification from MFP 500 to confirm whether MFP 500 has been used corresponding to the account information received from application server 300. Upon confirming the usage, a charging process of registering the account information received from application server 300 as the account information shown in Table 1 is executed.

The processing contents at each element to realize the processing flow of the account management system set forth above will be described hereinafter.

### [7. Process at Account Management Server]

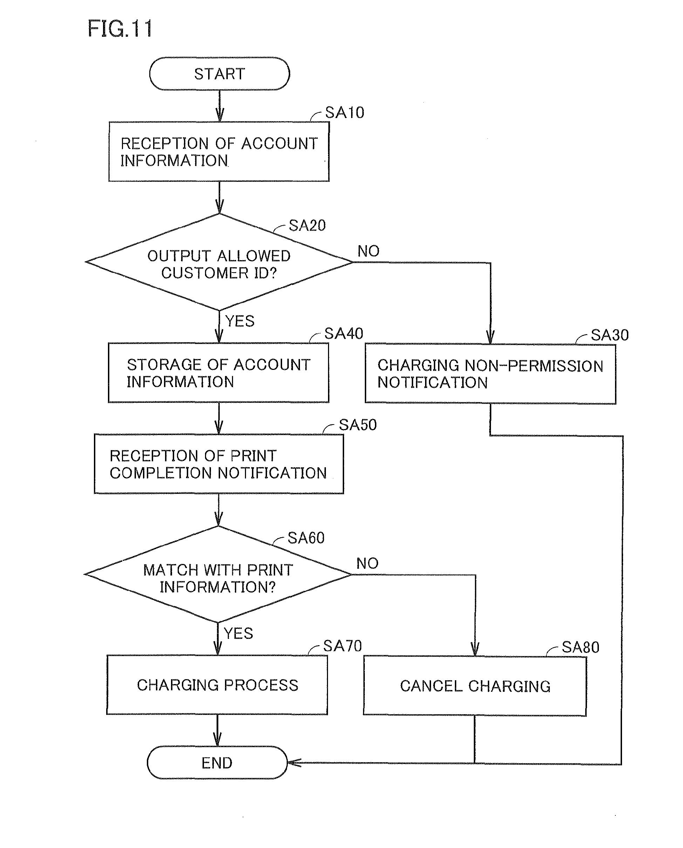

Fig. 11 is a flowchart of the process executed at account management server 200 in the account management system of the present embodiment.

Referring to Fig. 11, at step SA10 account management unit 202 receives account information from application server 300 via communication unit 201. The customer ID and print job ID are extracted from the account information. Customer management unit 206 is notified of the customer ID to confirm validity of the customer ID. The account information transmitted from application server 300 may include the usage confirmation waiting time (confirmation time: 10 minutes, or the like). At the elapse of a predetermined waiting time or a specified waiting time since the account information was received from application server 300, the account information is deleted from account information storage unit 203. Further, MFP 500 is instructed to cancel the printing.

At step SA20, customer management unit 206 confirms whether the customer ID received at step SA20 is present in customer management table 207 (Table 2) having customer information registered. Customer management unit 206 notifies account management unit 202 about the validity confirmation result of the customer ID. Customer management unit 206 may credit the customer corresponding to the customer ID. In such a case, the usage may be denied when the usage contents of the customer exceeds the set usage contents.

When the validity of the customer ID is confirmed at step SA40, account management unit 202 sets the usage confirmation flag at "unconfirmed" in the account information and stores the same in account information storage unit 203 (Table 1). Account management unit 202 also notifies usage confirmation unit 204 about the print job ID.

When the validity of the customer ID cannot be confirmed, control proceeds to step SA30 where account management unit 202 notifies application server 300 and MFP 500 via communication unit 201 that the usage is not permitted.

Following step SA40, control proceeds to step SA50 where usage confirmation unit 204 receives a print completion notification from MFP 500 via communication unit 201. The print job ID is extracted from the print completion notification.

Then at step SA60, usage confirmation unit 204 carries out print usage confirmation by confirming whether the extracted print job ID matches the print job ID (printing information) obtained from account management unit 202. Usage confirmation unit 204 notifies account management unit 202 about the confirmation result. At step SA60, confirmation of whether the print contents transmitted from MFP 500 matches the usage contents obtained from account management unit 202 is preferably made, in addition to the matching of the print job ID.

In the case where a print completion notification of the print job corresponding to the account information is not transmitted from MFP 500 to account management server 200 even if the predetermined waiting time or usage confirmation waiting time has elapsed since the account information was transmitted from application server 300, usage confirmation unit 204 may transmit a print notification request to MFP 500. Alternatively, in the case where a print completion notification is not transmitted from MFP 500 at an elapse of a predetermined time, usage confirmation unit 204 may determine that the print usage could not be confirmed.

In the case where print usage could be confirmed, control proceeds to step SA70 where account management unit 202 reads out the account information corresponding to the print job ID from account information storage unit 203, and then sets and stores in account information storage unit 203 "confirmed" as the usage confirmation flag. In the present embodiment, the account information stored in account information storage unit 203 may be withheld until "confirmed" is set as the usage confirmation flag, or the received account information stored in a temporary storage region until the account information is stored in account information storage unit 203. Furthermore, in the case where the print usage could be confirmed, account management unit 202 may notify application server 300 and/or MFP 500 about the confirmation.

In the case where the print usage could not be confirmed, control proceeds to step SA80 where account management unit 202 deletes the account information corresponding to the print job ID from account information storage unit 203. Account management unit 202 may enter the customer ID of the relevant customer into a black list, when the event of the print usage not being able to be confirmed for a certain customer occurs for a predetermined number of times, to restrict the usage.

In the present embodiment set forth above, account management unit 202 may provide a charging fee corresponding to the account information according to the contents of the charging subject in the account information (for example, the number of pages, or a data amount, or both) to carry out a charging process for each customer.

### [8. Process at Application Server]

Upon receiving a customer ID and a password to use application server 300 from client terminal 400 via communication unit 301, application information processing unit 302 transmits these pieces of information to customer information management unit 303. Customer information management unit 303 confirms the customer ID and password, and then notifies application information processing unit 302 about permitting log-in upon confirmation. Application information processing unit 302 notifies client terminal 400 about succeeding in log-in via communication unit 301.

Application information processing unit 302 performs processing via communication unit 301 according to a process request from client terminal 400 who has been notified about succeeding in log-in, and transmits the processing result to client terminal 400 via communication unit 301. The process set forth above is performed appropriately every time there is a process request from client terminal 400.

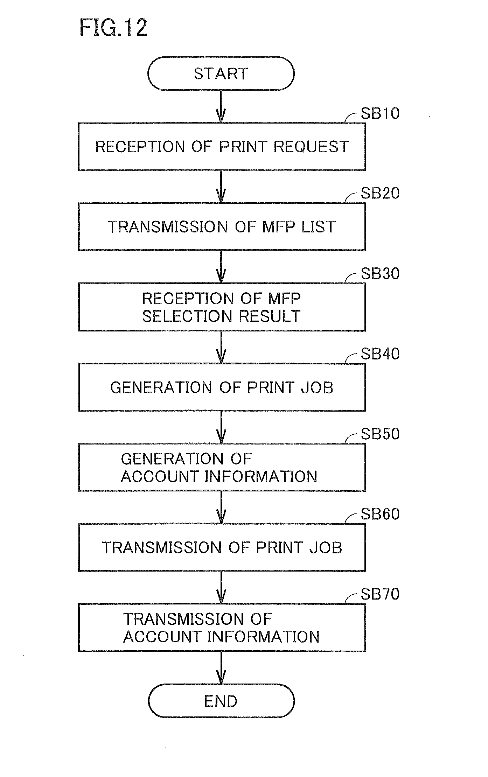

Fig. 12 is a flowchart of the process executed at application server 300. Referring to Fig. 12, the contents of the process corresponding to the print request from client terminal 400, executed at application server 300, will be described hereinafter.

At step SB10, application information processing unit 302 receives a print request from client terminal 400 via communication unit 301.

At step SB20, application information processing unit 302 reads out an available MFP 500 from MFP management table 307 (Table 3), and generates a list of available MFPs. Then, the relevant list is transmitted to client terminal 400 via communication unit 301.

At step SB30, application information processing unit 302 receives via communication unit 301 an MFP selection result (selected MFP information) from client terminal 400. Application information processing unit 302 notifies print preparation unit 304 about the print data, the customer ID stored in customer information management unit 303, and information of the selected MFP (information for identifying MFP: hereinafter, also referred to as "selected MFP information").

At step SB40, print preparation unit 304 transmits the print data and selected MFP information to print job generation unit 306. Print job generation unit 306 generates a print job for selected MFP 500 from the print data, based on the selected MFP information, and notifies print preparation unit 304 about the print job. Print preparation unit 304 generates a print job ID corresponding to the print job, and assigns the print job ID to the print job. Furthermore, the usage mode "network." is assigned to the print job. Print preparation unit 304 calculates the usage contents from the print job (the number of printouts, or printing fee).

The customer ID may be assigned, instead of the usage mode, to the print job. In the case where a customer ID is assigned, data that is a modified version of the customer ID using a hash function or challenge-response authentication may be employed. Thus, assigning a customer ID renders apparent the origin of the print job, achieving an advantage similar to that of assigning a usage mode. The assigned customer ID may be used in the process of charging for the output of the relevant print job.

Print preparation unit 304 assigns the usage mode "local" in the case where a job is received via intranet 1000 from a device in the intranet where MFP 500 is present.

Then, at step SB50, print preparation unit 304 notifies account information generation unit 305 about the customer ID, print job ID, and usage contents. Account information generation unit 305 generates account information from the customer ID, print job ID, and usage contents, and notifies print preparation unit 304 about the account information.

At step SB60, print preparation unit 304 transmits via communication unit 301 the account information to account management server 200. Further, the print job is transmitted to MFP 500.

### [9. Process at MFP]

It is assumed that MFP 500 constantly takes a standby state for a print job.

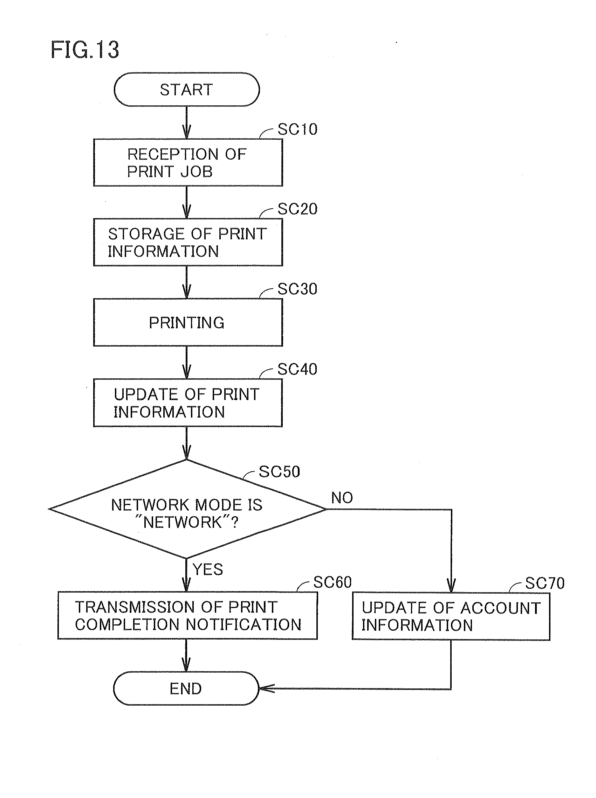

Fig. 13 is a flowchart of the process executed at MFP 500.

Referring to Fig. 13, at step SC10 for MFP 500, job management unit 502 receives via communication unit 501 a print job from application server 300. Job management unit 502 extracts a print job ID and usage mode from the print job, and notifies print information management unit 504 about the same, together with the reception date (the time receiving the print job). Job management unit 502 calculates the usage contents (the number of printouts or printing fee) from the print job, and notifies print information management unit 504 about the same.

At step SC20, print information management unit 504 stores the print job ID, reception date, print completion flag (initially, set at "uncompleted"), and the print contents as the print information in print information storage unit 505.

At step SC30, job management unit 502 transmits the print job to job execution unit 503. In response, job execution unit 503 carries out printing based on the print job at the background.

Upon completion of the printing, control proceeds to step SC40 where job execution unit 503 notifies job management unit 502 about the completed print job ID. Job management unit 502 notifies print information management unit 504 about the completed print job ID received from job execution unit 503. Print information management unit 504 reads out the print information corresponding to the completed print job ID from print information storage unit 505, sets the print completion flag to "completed", adds the printout completed date, and stores the same in print information storage unit 505.

Then at step SC50, print information management unit 504 notifies charging processing unit 506 about the print information corresponding to the completed print job ID. Charging processing unit 506 extracts the usage mode from the print information to confirm the usage mode. In determining the type of the print job, the customer ID may be used instead of the usage mode. In this case, a determination is made as to whether the customer ID matches the ID of the owner of MFP 500.

In the case where the usage mode is "network", control proceeds to step SC60. In the case where the usage mode is "local", control proceeds to step SC70.

At step SC60, charging processing unit 506 determines that the print job is through network 900, and does not update the information in account information storage unit 507 that saves the usage contents of the local user. Print information management unit 504 generates a print completion notification from the print information corresponding to the completed print job ID. The print completion notification includes a print job ID. Print information management unit 504 transmits a print completion notification to account management server 200 via communication unit 501. The relevant history may be deleted from print information storage unit 505 on the condition that transmission of the relevant print completion notification has been completed. The print completion notification may include print information other than the print job ID. The print information preferably includes the print contents, for example. A print completion notification does not have to be transmitted to account management server 200 every time a print job is completed. In other words, the print completion notification may be accumulated. The accumulated print completion notification may be transmitted to account management server 200 at every predetermined time (for example, transmitted for every hour, or transmitted at 24:00 every day, or the like), or on the condition that a predetermined number of jobs (for example, 100 jobs) have been accumulated. This scheme is a particularly preferable in the case where the charging for the usage of MFP 500 is controlled entirely at account management server 200, i.e. charging when the user directly operates MFP 500, and the charging when the user sends a print job to MFP 500 directly from a PC.

At step SC70, charging processing unit 506 determines that the print job is from a user in the intranet. Account information storage unit 507 retaining the usage contents of the user in the intranet is read out, and the usage contents are added, followed by update of account information storage unit 507. The print history may be stored in a server differing from MFP 500.

In the account management system, all the account information may be organized at account management server 200. In other words, determination of the print mode is not made at MFP 500, and the print information of both the printing via network 900 and the printing in the intranet may be transmitted to account management server 200. At account management server 200, the print job ID in the print information is extracted, and the customer ID corresponding to the print job ID is obtained from account information storage unit 203. Account management server 200 organizes the account information for each customer ID.

### <Second Embodiment>

### [1. Processing at Account Management System]

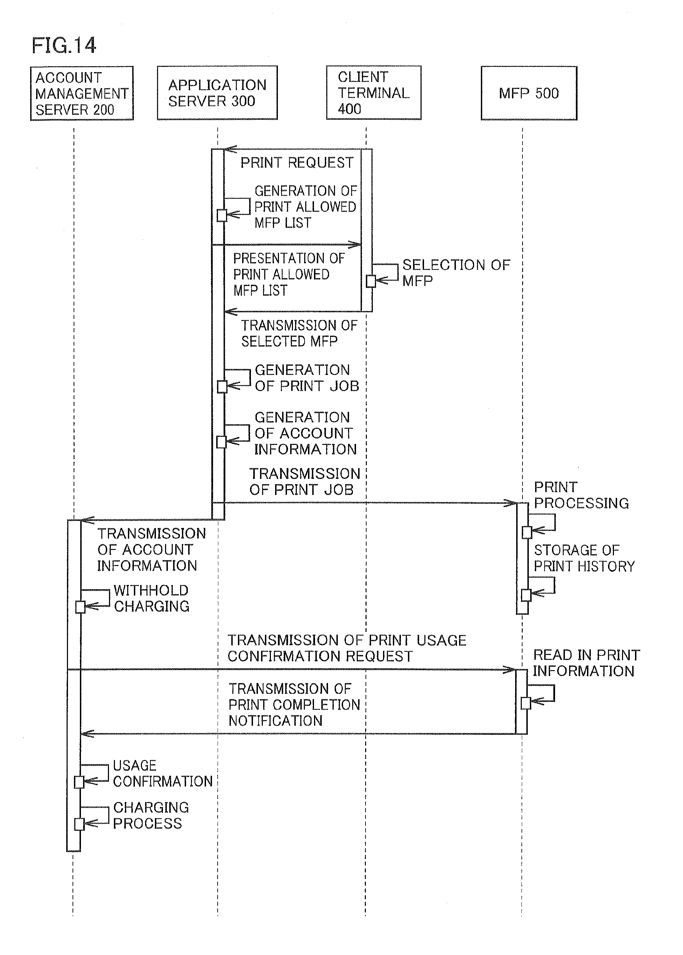

Fig. 14 is a sequence diagram for describing an operation timing of each element in the account management system of the present embodiment.

Referring to Fig. 14 corresponding to the present embodiment, application server 300 transmits a print job to MFP 500, and the process following transmission of the account information to account management server 200 is modified, relative to the first embodiment.

Specifically, account management server 200 withholds the account information received from application server 300 until a print completion notification is received from MFP 500. Meanwhile, account management server 200 transmits information requesting transmission of a print completion notification (print usage confirmation request) to MFP 500 corresponding to the relevant account information of MFP 500.

MFP 500 executes a print process according to the print job received from application server 300, and stores, when the relevant print process is completed, the print history of the relevant print process. Then, in response to reception of a print usage confirmation request from account management server 200, a print completion notification is transmitted to account management server 200.

Account management server 200 responds to reception of a print management notification from MFP 500 to confirm whether usage of MFP 500 corresponding to the account information received from application server 300 has been made or not. When the usage is confirmed, a charging process of registering the account information received from application server 300 as the account information shown in Table 1 is executed.

Each element in the account management system of the present embodiment will be described mainly based on the contents modified from those of the first embodiment.

### [2. Account Management Server]

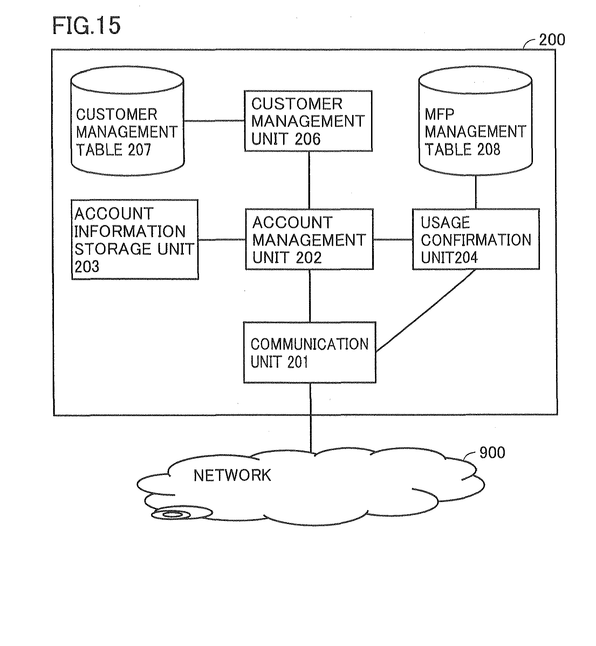

Fig. 15 is a control block diagram of account management server 200 of the present embodiment.

Account management server 200 of the present embodiment further includes an MFP management table 208 as a functional element. The information stored in MFP management table 208 is similar to that stored in MFP management table 307. MFP management table 208 is implemented by storage unit 260.

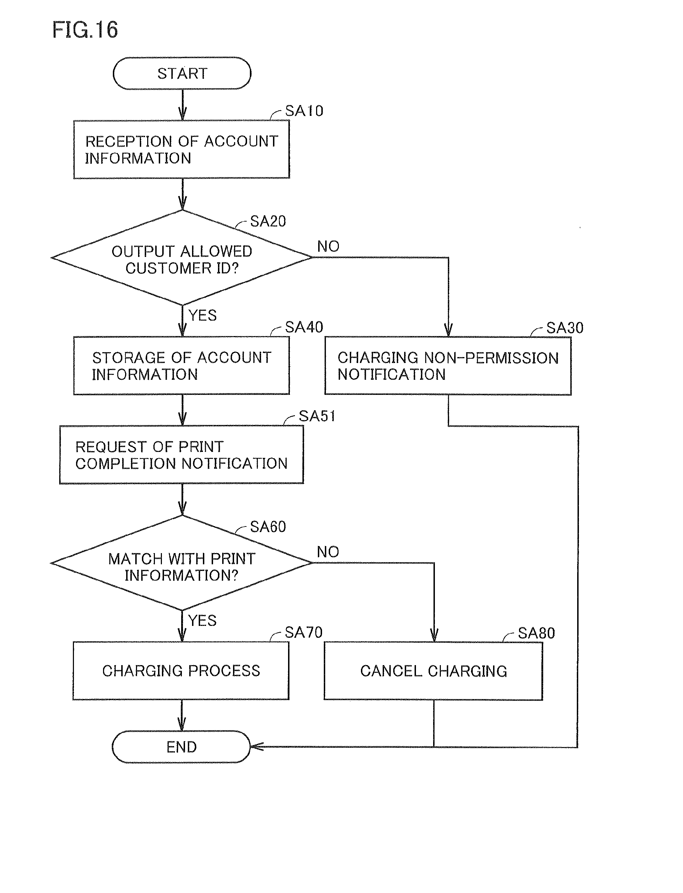

Fig. 16 is a flowchart of the process executed by account management server 200 of Fig. 15.

Referring to Fig. 16 corresponding to a modification, following storage of the account information at step SA40, control proceeds to step SA51 where usage confirmation unit 204 reads in the information of the MFP used for the print process from MFP management table 208, and obtains the access destination of MFP 500 corresponding to the relevant information (IP (Internet Protocol) address or URL (Uniform Resource Locator)). Usage confirmation unit 204 transmits to MFP 500 a print usage confirmation request via communication unit 201. The print usage confirmation request includes a print job ID and a customer ID. Usage confirmation unit 204 receives from MFP 500 a print completion notification via communication unit 201 to extract the customer ID and print job ID from the print completion notification. The aforementioned access destination of the MFP corresponding to the information may be included in account information.

### [3. MFP]

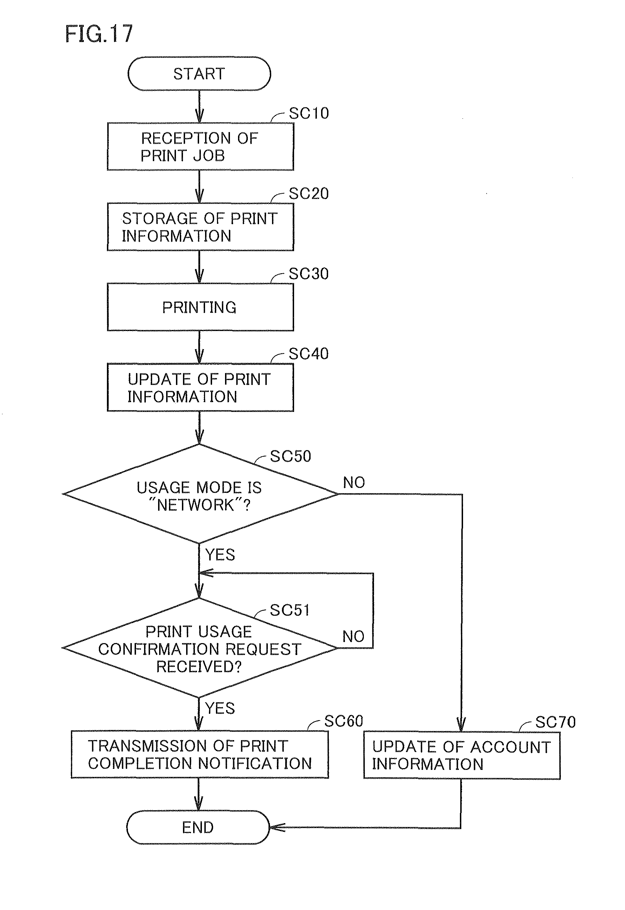

Fig. 17 is a flowchart of the process executed by MFP 500 of the present embodiment.

Referring to Fig. 17, when a determination is made that the usage mode is "network" at step SC50 in the present embodiment, control proceeds to step SC61.

At step SC61, print information management unit 504 receives a print usage confirmation request from account management server 200 via communication unit 501. In the present embodiment, job execution unit 503 may initiate printing after receiving a print usage confirmation request from account management server 200. Confirmation of a proper print job can be made by confirming that of the print job ID included in the print usage confirmation request matches the print job ID in the print job that is to be carried out.

At step SC70, print information management unit 504 extracts the print job ID from the print usage confirmation request, and obtains the relevant print information from print information storage unit 505. Print information management unit 504 generates a print completion notification from the print information corresponding to the print job ID. The print completion notification includes a print job ID. Print information management unit 504 transmits to account management server 200 via communication unit 501 the obtained print completion notification.

### <Third Embodiment>

### [1. Structure of Account Management System]

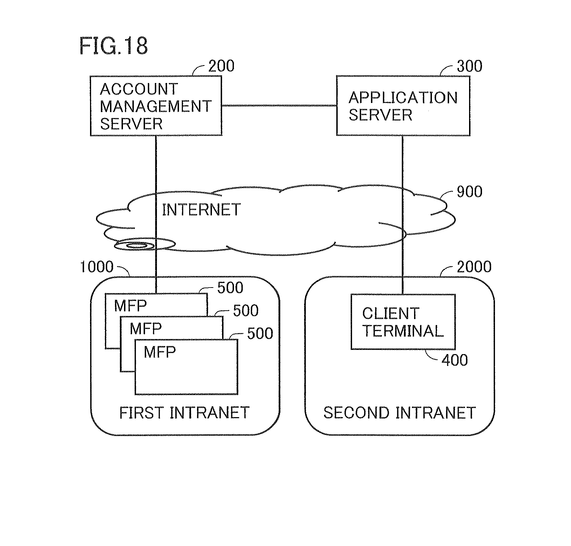

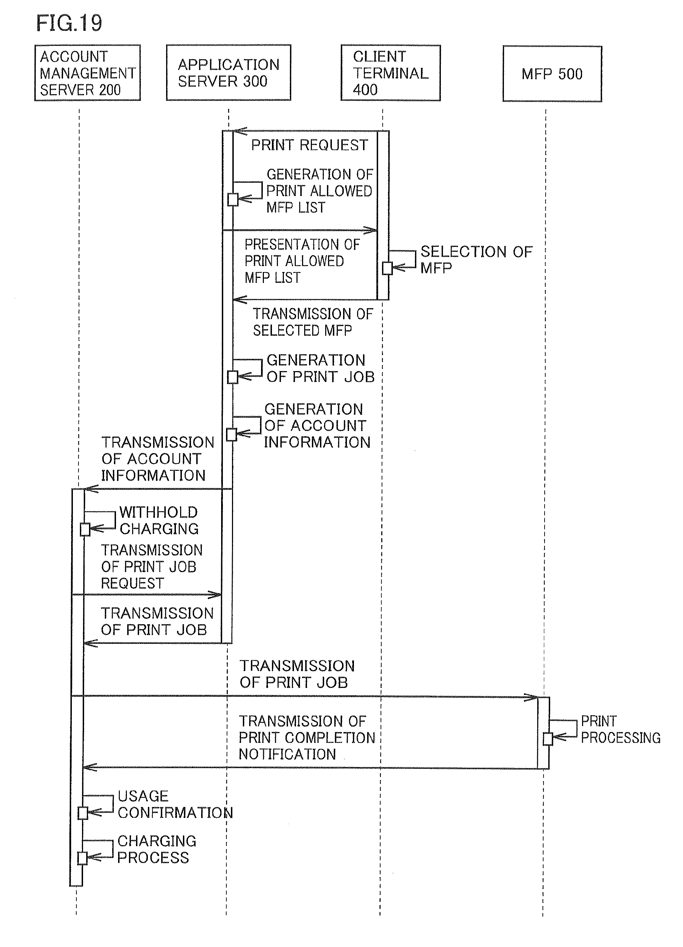

Fig. 18 schematically represents an entire structure of an account management system of the present embodiment. Fig. 19 is a timing chart of the process executed at each element in the account management system of the present embodiment.

Referring to Figs. 18 and 19, when a print request is received from client terminal 400 in the present embodiment, application server 300 generates a print job, and transmits the print job to account management server 200, not to MFP 500. Upon receiving a print job from application server 300, account management server 200 transmits the relevant print job to MFP 500.

By such a configuration, account management server 200 can properly generate account information by comparing the contents of the print job transmitted to MFP 500 with the account information.

### [2. Account Management Server]

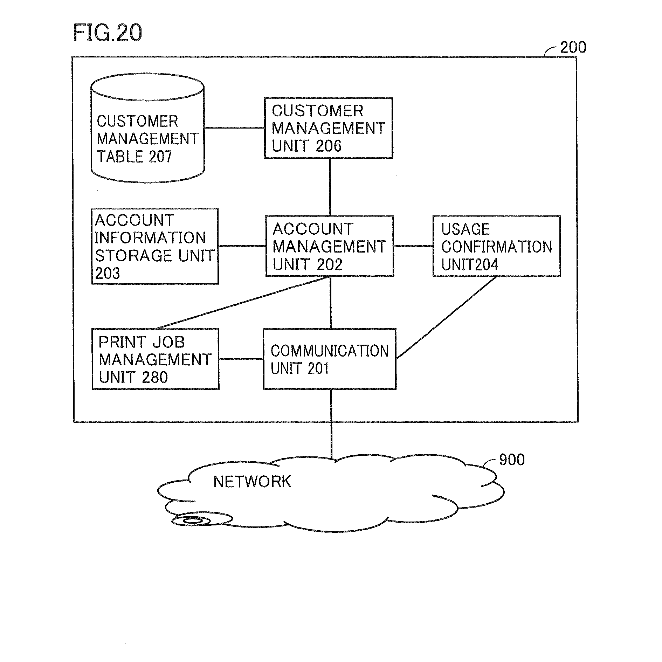

Fig. 20 is a control block diagram of account management server 200 of the present embodiment.

Referring to Fig. 20, account management server 200 of the present embodiment further includes a print job management unit 280 as a functional element. Print job management unit 280 is implemented by, for example, CPU 251 executing a program stored in program storage unit 261, or by a circuit such as a dedicated LSI.

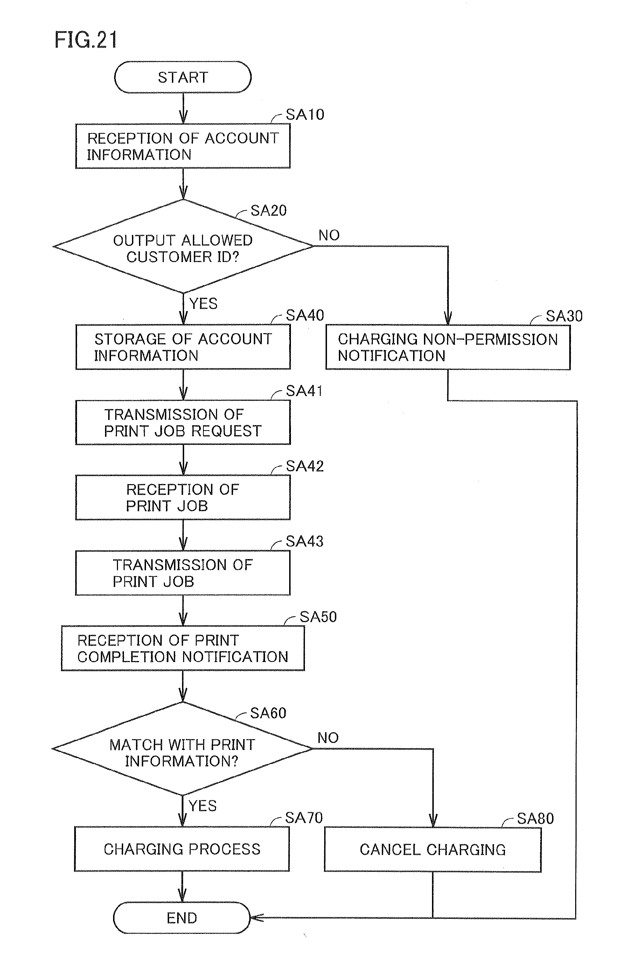

Fig. 21 is a flowchart of the process executed by account management server 200 of the present embodiment.

Referring to Fig. 21, following storage of the account information at step SA40 in the present embodiment, control proceeds to step SA41. The account information includes, for example, a customer ID, job ID, and usage contents.

At step SA41, print job management unit 280 transmits to application server 300 via communication unit 201 information requesting transmission of a print job (print job request).

At step SA42, print job management unit 280 receives a print job from application server 300 via communication unit 201. Then, control proceeds to step SA43.

Here, print job management unit 280 preferably checks the received print job such as the printing amount, whether falsified or not, and/or damage of data, and the like. Checking the printing amount includes, for example, whether a predetermined amount is exceeded or not, such as whether the amount is unnaturally large in the system to which the present invention is applied. Checking for falsification and data damage may include an operation carried out by electronic signature utilizing a digital certificate. The transmission party of the print job applies an electronic signature to the print job or to the file that is the subject of a print job, using a private key. The reception party confirms validity of the electronic signature (not falsified) using a public key sent in advance from the transmission party. For checking whether the data is damaged or not by some trouble or the like, check sum (CRC (Cyclic Redundancy Check) or hash) may be employed.

In the case where print job management unit 280 determines that the printing amount exceeds a predetermined amount, or that a print job has been falsified, control may proceed to step SA80, not to step SA43. Accordingly, the event of a relevant print job being transmitted to MFP 500 for output can be avoided in the case where the printing amount is unnaturally too large or falsification of the print job is suspected.

At step SA43, print job management unit 280 assigns a print job ID to the print job, and transmits the print job to MFP 500 via communication unit 201.

At step SA50, usage confirmation unit 204 receives via communication unit 201 a print completion notification from MFP 500. A print job ID is extracted from the print completion notification.

### [3. Application Server]

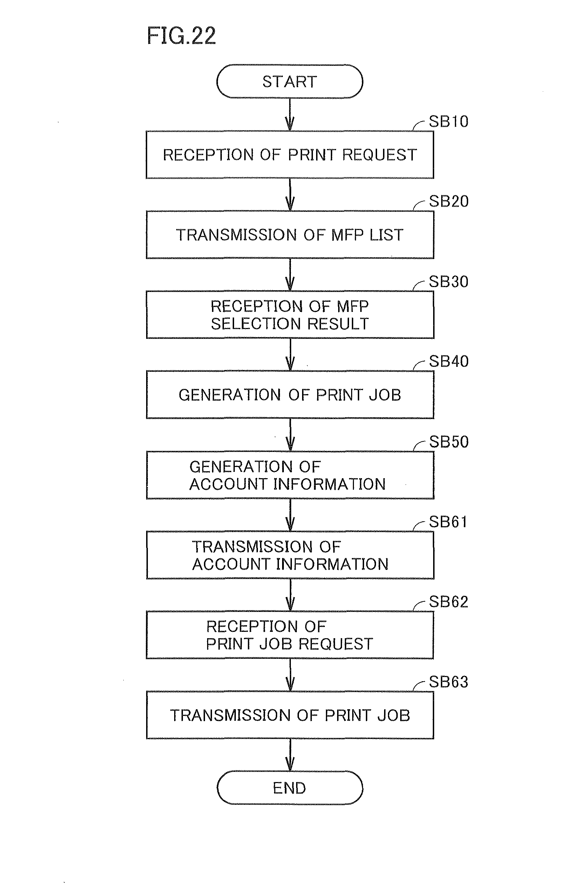

Fig. 22 is a flowchart of the process executed by application server 300 of the present embodiment.

Referring to Fig. 22, following generation of account information at step SB50 at application server 300 of the present embodiment, control proceeds to step SB61.

At step USB61, print preparation unit 304 transmits to account management server 200 the account information via communication unit 301.

At step SB62, print preparation unit 304 receives from account management server 200 a print job request via communication unit 301.

At step SB63, print preparation unit 304 transmits a print job to account management server 200 via communication unit 301.

### [4. MFP]

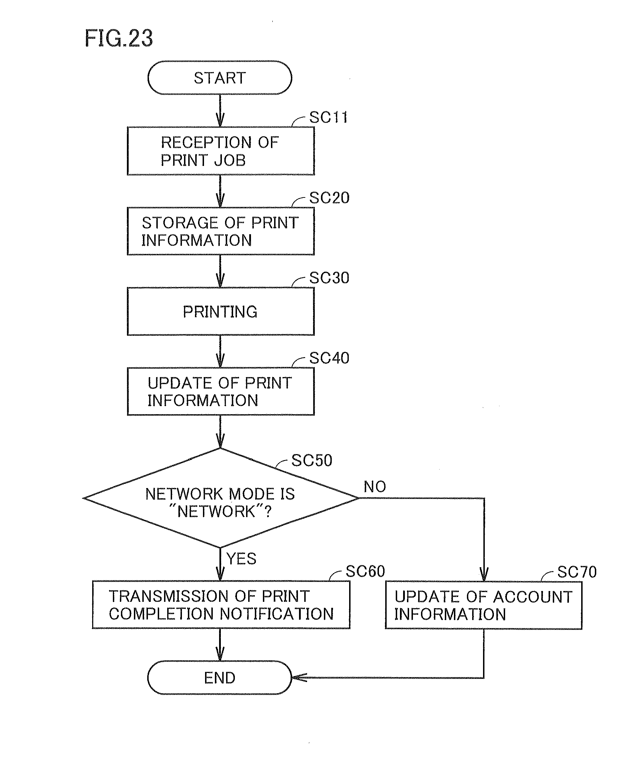

Fig. 23 is a flowchart of the process executed by MFP 500 of the present embodiment.

At step SC11 for MFP 500 in the present embodiment, job management unit 502 receives a print job from account management server 200 via communication unit 501.

At MFP 500, the process of steps SC20 and later is executed.

### <Fourth Embodiment>

### [1. Structure of Account Management System]

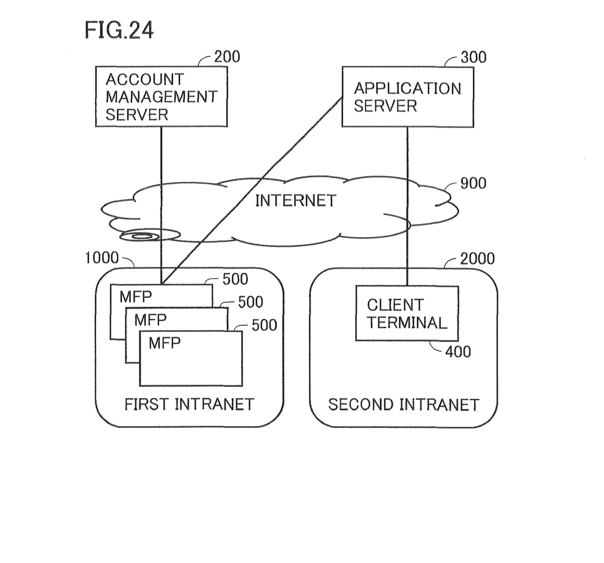

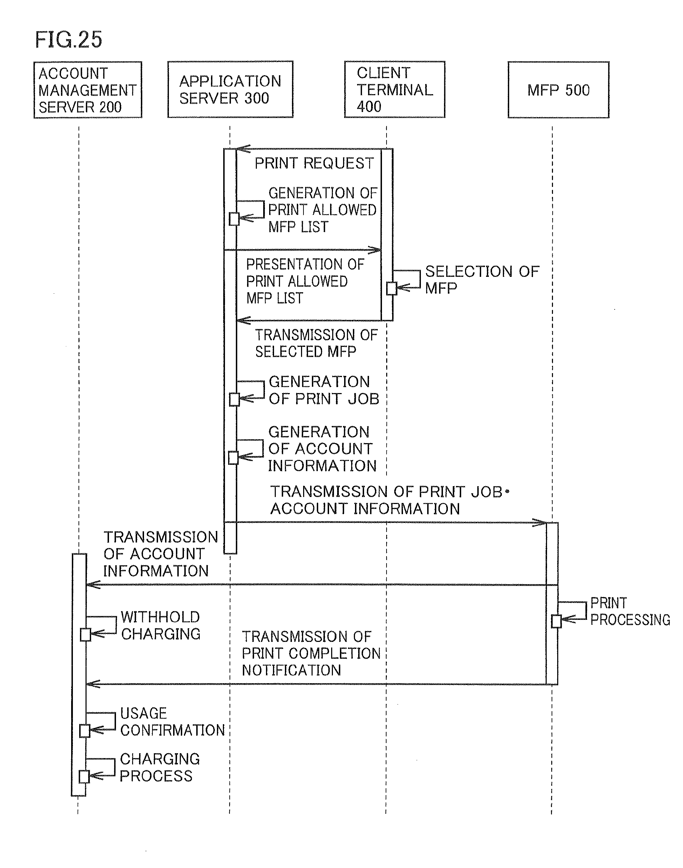

Fig. 24 schematically represents an entire structure of an account management system of the present embodiment. Fig. 25 is a timing chart of the process executed at each element in the account management system of the present embodiment.

Referring to Figs. 24 and 25, in response to receiving a print request from client terminal 400 in the present embodiment, application server 300 transmits a print job and account information to MFP 500. Upon receiving account information, MFP 500 transmits the account information to account management server 200, and executes the print job. Upon completing the print job, MFP 500 transmits a print completion notification to account management server 200.

By the structure set forth above, application server 300 does not have to directly access account management server 200 controlling the account information. Accordingly, when the administrators of application server 300 and account management server 200 differ, the risk of falsifying the management information of account management server 200 (illegal rewriting of account information and the like) can be reduced by the administrator of application server 300.

### [2. Account Management Server]

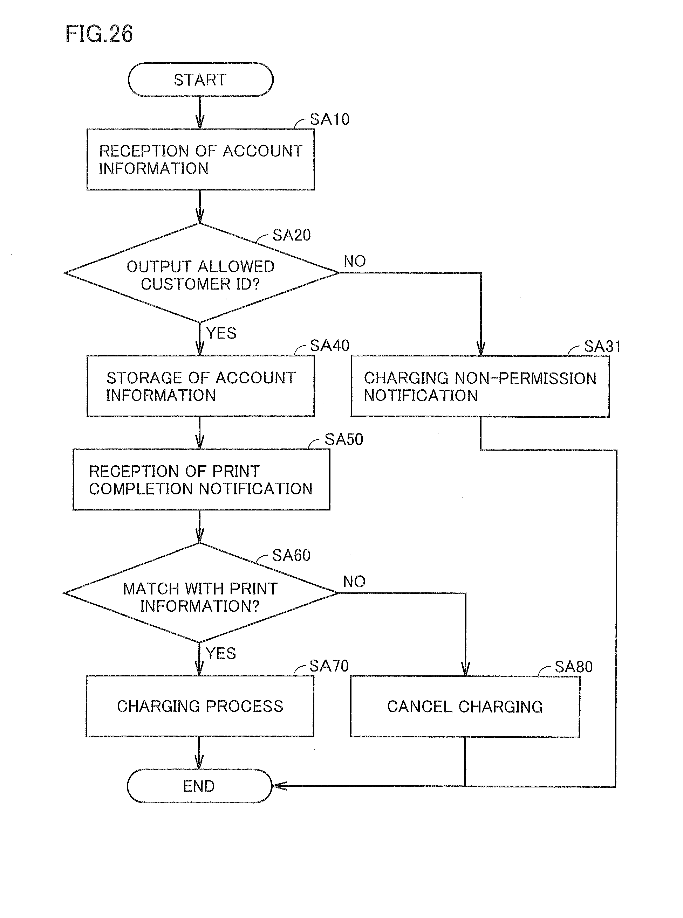

Fig. 26 is a flowchart of the process executed by account management server 200 of the present embodiment.

Referring to Fig. 26, in the present embodiment, account management unit 202 receives, at step SA10, account information from MFP 500 via communication unit 201. Then, account management unit 202 extracts the customer ID and print job ID from the account information, and notifies customer management unit 206 about the customer ID.

At step SA20, customer management unit 206 determines whether the account information received from account management unit 202 is present in customer management table 207 where the customer information is registered. When customer management unit 206 determines that the account information is not present, control proceeds to step SA31.

At step SA31, account management unit 202 notifies MFP 500 via communication unit 201 that the usage is not permitted.

In contrast, when a determination is made that the customer ID is present at step SA20, the processing of steps SA40 and later is executed.

### [3. Application Server]

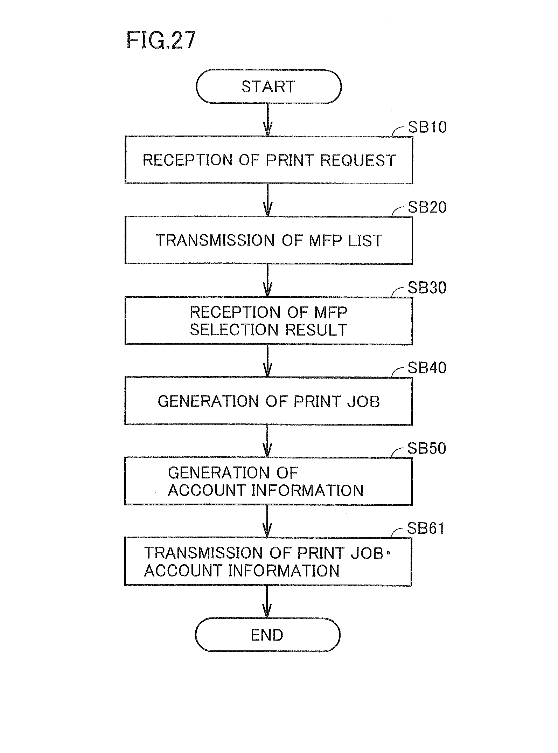

Fig. 27 is a flowchart of the process executed by application server 300 of the present embodiment.

Referring to Fig. 27 corresponding to the present embodiment, a print job is generated at step SB40. Upon generation of account information at step SB50, control proceeds to step SB61.

At step SB61, print preparation unit 304 transmits via communication unit 301 account information and a print job to MFP 500 selected by client terminal 400. At this stage, the account information and print job may be transmitted to a predetermined MFP 500 in first intranet 1000, other than MFP 500 selected by client terminal 400.

### [4. MFP]

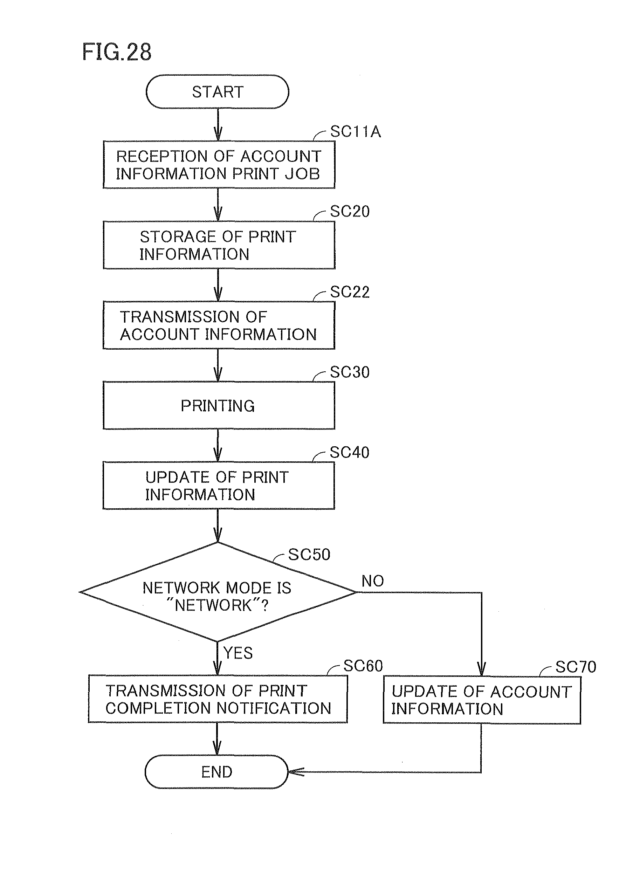

Fig. 28 is a flowchart of the process executed by MFP 500 of the present embodiment.

Referring to Fig. 28, at step SC11A, job management unit 502 receives from application server 300 account information and a print job via communication unit 501. Job management unit 502 extracts the print job ID and usage mode from the print job, and notifies print information management unit 504 of the same, together with the reception date (the time when the print job is received). Job management unit 502 calculates the usage contents from the print job (the number of printouts or printing fee), and notifies print information management unit 504 about the same.

At step SC20, print information management unit 504 stores the print job ID, customer ID, the reception date, print completion flag (initially set at "uncompleted"), and the print contents as the print information in print information storage unit 505 (Table 5).

Then at step SC22, print information management unit 504 transmits via communication unit 501 the account information to account management server 200.

Then, the processing of steps SC30 and later is executed.

### <Fifth Embodiment>

In an account management system of the present embodiment, MFP 500 responds to reception of a print job to execute the relevant print job on the condition that information indicating that the relevant print job is proper has been received.

The processing at MFP 500 and account management server 200 in the present embodiment may be combined with other embodiments in the present description. Particularly, the combination with the first or second embodiment is advantageous from the standpoint of causing MFP 500 to execute only a print job of high reliability.

### [1. Account Management Server]

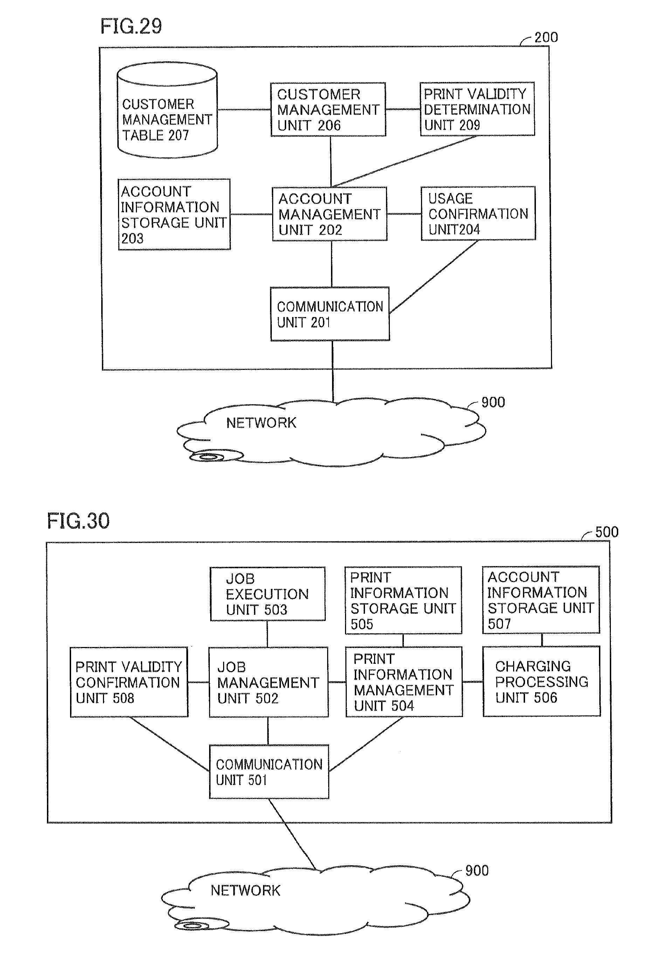

Fig. 29 is a control block diagram of an account management server 200 of the present embodiment.

Referring to Fig. 29, account management server 200 of the present embodiment further includes a print validity determination unit 209. Print validity determination unit 209 may be implemented by CPU 251 executing a program stored in program storage unit 261, or may be realized by hardware through a circuit such as a dedicated LSI provided at account management server 200.

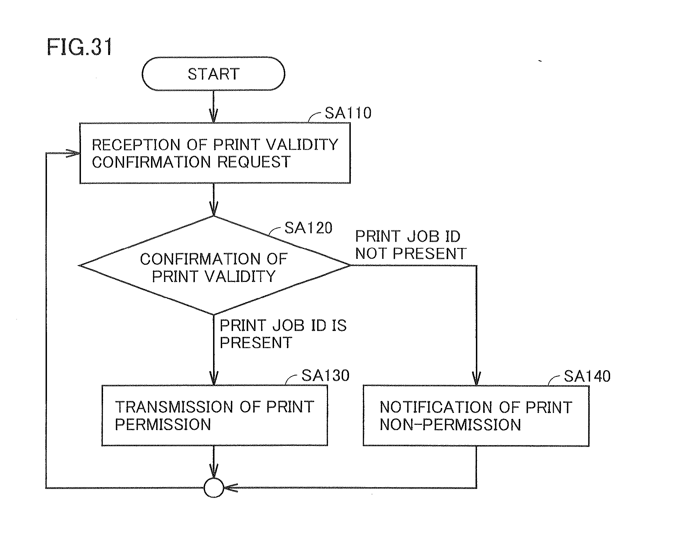

Fig. 31 is a flowchart of the process executed by account management server 200 of Fig. 29. Fig. 31 represents the process corresponding to confirming validity of a print job from MFP 500. Account management server 200 of the present embodiment executes the process in the flowchart of Fig. 31, together with the process described with reference to Figs. 11 and the like.

Referring to Fig. 31, upon receiving a print validity confirmation request that will be described afterwards from MFP 500 via communication unit 201, account management unit 202 notifies print validity determination unit 209 about the reception at step SA110.

At step SA120, print validity determination unit 209 extracts a print job ID from the print validity confirmation request, and determines whether the specified print job ID is present in account information storage unit 203. When a determination is made that the print job ID is present, control proceeds to step SA130, otherwise to step SA140.

At step SA130, print validity determination unit 209 makes a determination of a proper print request, and notifies account management unit 202 that printing is allowed. Account management unit 202 transmits a print permit notification to MFP 500 via communication unit 201.

At step SA140, print validity determination unit 209 makes a determination of an improper print request, and notifies account management unit 202 that printing is not allowed. Account management unit 202 transmits a print non-permission notification to MFP 500 via communication unit 201.

At account management server 200 of the present embodiment, the process shown in Fig. 31 is executed every time a print validity confirmation request is received from MFP 500.

### [2. MFP]

Fig. 30 is a control block diagram of MFP 500 of the present embodiment.

Referring to Fig. 30, MFP 500 of the present embodiment further includes a print validity confirmation unit 508 as a functional element. Print validity confirmation unit 508 may be implemented by CPU 551 executing a program stored in program storage unit 561, or may be realized by hardware through a circuit such as dedicated LSI provided at MFP 500.

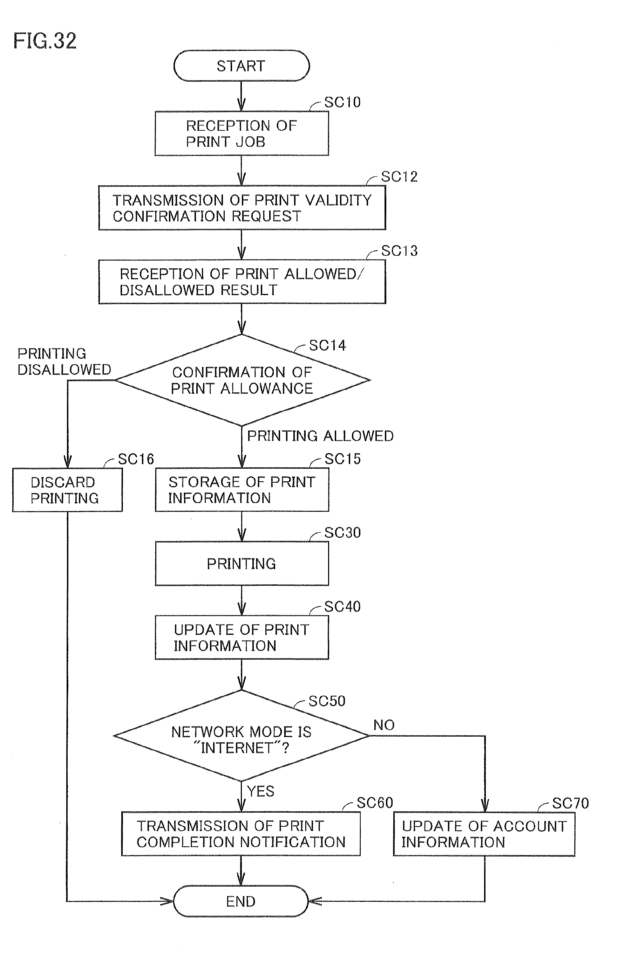

Fig. 32 is a flowchart of the process executed by MFP 500 of Fig. 30.

Referring to Fig. 32, upon job management unit 502 receiving a print job from application server 300 at step SC10, control proceeds to step SC12.

At step SC12, job management unit 502 notifies print validity confirmation unit 508 about the print job ID. Print validity confirmation unit 508 generates information to request confirmation of the validity of the print request corresponding to the print job ID (print validity confirmation request), and transmits the request to account management server 200 via communication unit 501. The print validity confirmation request includes a print job ID. The print validity confirmation request may include a customer ID of the customer requesting the printing. In this case, the customer ID in the print job transmitted from application server 300 is used.

At step SC13, print validity confirmation unit 508 receives a print allowed/disallowed result from account management server 200 via communication unit 501. The print allowed/disallowed result is the determination result made at step SA120. When a determination is made that the print job ID is present, the relevant print allowed/disallowed result is "printing allowed". When a determination is made that the print job ID is not present, the relevant print allowed/disallowed result is "printing disallowed".

At step SC14, print validity confirmation unit 508 reads in the printing allowed/disallowed result to confirm whether printing is allowed or not. In the case of "printing allowed", control proceeds to step SC15. In the case of "printing disallowed ", control proceeds to step SC16.

At step SC15, print validity confirmation unit 508 notifies job management unit 502 about starting printing. Job management unit 502 notifies print information management unit 504 about the print job ID, the usage mode, and the reception date (the time when the print job is received) from the print job. Job management unit 502 calculates the usage contents (the number of printouts or printing fee) from the print job, and notifies print information management unit 504 about the same. Print information management unit 504 stores the print job ID, customer ID, reception date, print completion flag (initially, set at "uncompleted"), and the print contents as the print information in print information storage unit 505 (Table 5). Then, control proceeds to step SC 30.

At step SC16, print validity confirmation unit 508 notifies job management unit 502 about the denied printing. Job management unit 502 deletes (discards) the print job, and ends the processing shown in Fig. 32.

When the customer ID is included in the print job in the present embodiment, a message indicating that printing is denied may be displayed on a display panel (display device 558) of MFP 500. Alternatively, MFP 500 may notify application server 300 about the printing being denied, and application server 300 may notify the client terminal (user) about the printing being denied.

In the case where printing is denied by "printing disallowed", the administrator of account management server 200 or MFP 500 may be notified of an event of an illegal print request by transmitting electronic mail or the like.

Furthermore, in the case of printing being denied by "printing disallowed", information asking the user whether to carry out printing or not may be transmitted, and printing being executed on the condition that the user sends back a condition corresponding to allowing printing. In this case, the charging for the relevant print process is presented to the customer associated with MFP 500 that executes the process.

### <Sixth Embodiment>

### [1. Account Management System]

In the account management system of the present embodiment, a joint job service provided in a SaaS (Software as a Service) form is envisaged to be used by a plurality of users for a joint job at application server 300. The project leader invites the project participants to a work space on application server 300.

In the present service, the work space for the job is divided for each project (project = constituted of one or work spaces). In the work space, data such as the text of a project are stored, allowing the user participating in the project to edit the text. In the joint job service, the service usage status information of a user is monitored, as shown in Table 6.

**Table 6**

| Current User | Project (work space) | Current Location | Local Time | IP Address | Today's Schedule (Conference, Business Trip, and the like) |
|---|---|---|---|---|---|
| U001 | PRJ001 | site A | 9:30 | 192.168.0.2 | |
| U003 | PRJ002 | site B | 9:30 | 192.168.1.5 | 13:00∼15:00: Conference at site A |
| U004 | PRJ001 | site A | 9:30 | 192.168.0.8 | |
| U006 | PRJ002 | station X | 9:30 | 192.168.1.7 | all-day: out of office at Exhibition Y |
| U007 | PRJ001 | site D | 17:30 | 192.168.2.3 | |

The service usage state information of Table 6 includes, for each user ID, the ID of the project (work space) in which the relevant user is participating, the current location of the user (physical location), the current local time at the current location, the IP address for each user to communicate, and today's schedule for each user, all stored in association with each other. The storing form is not limited to a table format such as that shown in Table 6.

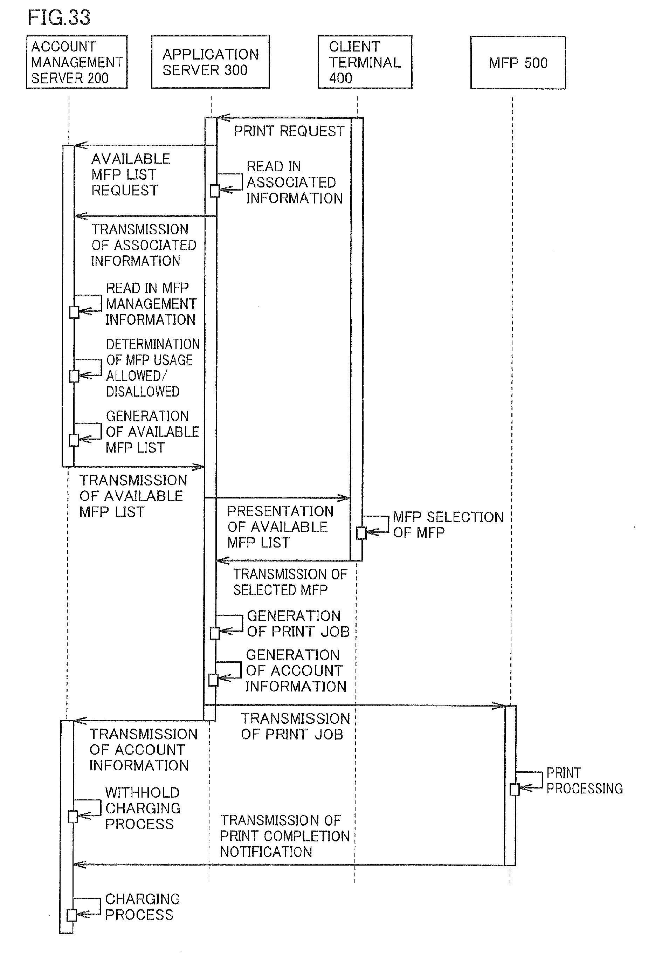

Fig. 33 is a timing chart of the process executed by each element in the account management system of the present embodiment.

Referring to Fig. 33, when a print request is transmitted from client terminal 400 to application server 300 in the account management system of the present embodiment, application server 300 transmits to account management server 200 information requesting a list of MFPs that can execute the print job corresponding to the relevant print request. Application server 300 reads in the associated information, and transmits the relevant associated information to account management server 200.

An example of the associated information stored at application server 300 is shown in Table 7.

**Table 7**

| Current User | Project (work space) | Current Location | Local Time | IP Address | Today's Schedule (Conference, Business Trip, and the like) |
|---|---|---|---|---|---|
| U001 | PRJ001 | site A | 9:30 | 192.168.0.2 | |
| U004 | PRJ001 | site A | 9:30 | 192.168.0.8 | |
| U007 | PRJ001 | site D | 17:30 | 192.168.2.3 | |

The associated information includes, for each user ID, the ID of the project (work space) in which each user is participating, the current location, the local time, the IP address, and today's schedule, all stored in association. The storing form is not limited to a table format such as that shown in Table 7.

The associated information may be stored, not at application server 300, but at another server capable of communication with application server 300 (for example, a usage management server 100 or the like that will be described afterwards).

Upon receiving associated information, account management server 200 reads in the MFP management information, determines whether usage is allowed/disallowed for each MFP, and generates a list of available MFPs. Then, account management server 200 transmits the generated list to application server 300.

Upon receiving the list, application server 300 transmits the relevant list to client terminal 400. Client terminal 400 transmits information for selecting the MFP to be used from the transmitted list to application server 300.

Upon receiving the selecting information, application server 300 generates a print job and account information, and transmits the print job to selected MFP 500, as set forth above, and transmits the account information to account management server 200.

Account management server 200 withholds the charging processing based on the received account information until a print completion notification is received from MFP 500.

Upon receiving the print job, MFP 500 executes a print process based on the relevant print job, and transmits, when the printing is completed, a print completion notification of the relevant print job to account management server 200.

Upon receiving a print completion notification, account management server 200 executes the withheld charging process.

By replacing the process up to generation of a print job of the present embodiment with the process up to generation of a print job executed in another embodiment, the present embodiment can be carried out in combination with another embodiment.

### [2. Account Management Server]

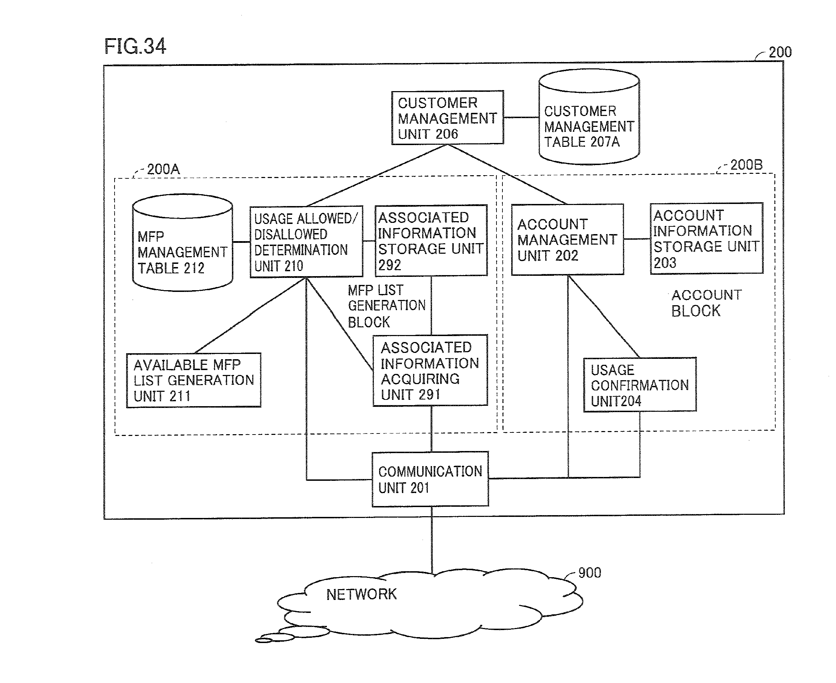

Fig. 34 is a control block diagram of an account management server 200 of the present embodiment.

Account management server 200 includes, as a functional element, an associated information acquiring unit 291, an associated information store 292, a usage allowed/disallowed determination unit 210, an available MFP list generation unit 211, and an MFP management table 212. In the present embodiment, customer management table 207 is replaced with a customer management table 207A. Associated information acquiring unit 291, usage allowed/disallowed determination unit 210 and available MFP list generation unit 211 are implemented by CPU 251 executing a program stored in program storage unit 261, or by hardware through a circuit such as a dedicated LSI provided at account management server 200. Customer management table 207A and MFP management table 212 are implemented by storage unit 260.

At account management server 200, account management unit 202, account information storage unit 203, and usage confirmation unit 204 constitute an account block 200B. Associated information acquiring unit 291, associated information store 292, usage allowed/disallowed determination unit 210, available MFP list generation unit 211 and MFP management table 212 constitute an MFP list generation block 200A.

Table 8 represents an example of information stored in customer management table 207A.

**Table 8**

| User ID | Available MFP | Corresponding Department | Corresponding Project |
|---|---|---|---|
| U001 | P001 | Department A | PRJ001 |
| | P002 | | |
| U002 | P001 | Department A | PRJ001 |
| | P002 | | PRJ002 |
| U003 | P001 | Department A | PRJ002 |
| | P002 | | |
| U004 | P003 | Department B | PRJ001 |
| | P004 | | |
| | P005 | | |
| U005 | P003 | Department B | PRJ001 |
| | P004 | | |
| | P005 | | |
| U006 | P006 | Department C | PRJ002 |
| U007 | P007 | Department D | PRJ001 |

As appreciated from Table 8, customer management table 207A includes, for each user, an ID, information for identifying an available MFP, the corresponding department, and the corresponding project, all stored in association with each other. The storing format is not limited to a table format, such as that shown in Table 8.

Table 9 represents an example of information stored in MFP management table 212.

**Table 9**

| MFP ID | Machine Type | Installed Site | Usage Allowed Department | Serial Number |
|---|---|---|---|---|
| P001 | MFP 100 | Department A | Department A PRJ001 | 161464 |
| P002 | MFP 100 | Department A | Department A PRJ002 | 636451 |
| P003 | MFP 120 | Department B | Department B PRJ001 | 350054 |
| P004 | MFP 210 | Department B | Department B PRJ001 | 245898 |
| P005 | MFP 210 | Department B | Department B | 465759 |
| P006 | MFP 120 | Department C | Department C PRJ002 | 348790 |
| P007 | MFP 110 | Department D | Department D | 546323 |

As appreciated from Table 9, MFP management table 212 includes, for each MFP, an ID, the machine type, installed site (physical location), information for identifying the department or project having usage permitted (usage allowed department), and a serial number, all stored in association. The storing form is not limited to the table format such as that shown in Table 9.

The contents stored in customer management table 207A and/or MFP management table 212 may be stored, not in account management server 200, but in another server capable of communication with account management server 200, such as a usage management server 100 that will be described afterwards.

### [3. Application Server]

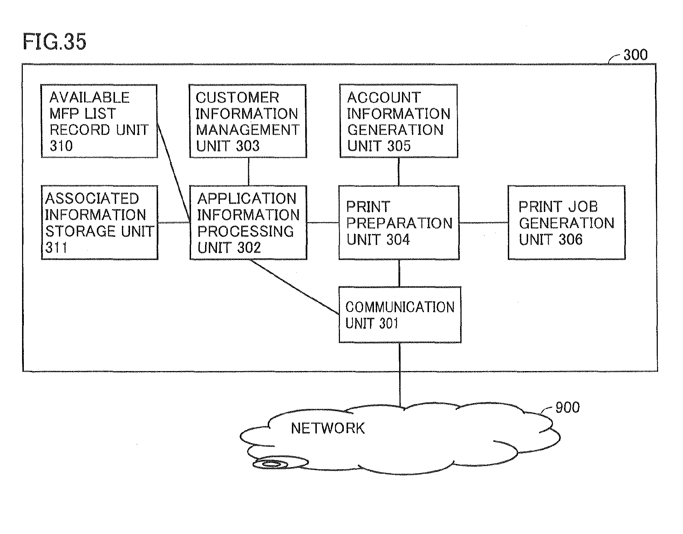

Fig. 35 is a control block diagram of application server 300 of the present embodiment.

Referring to Fig. 35, application server 300 of the present embodiment is absent of MFP management table 307, and includes instead, an available MFP list record unit 310, and an associated information storage unit 311. Available MFP list record unit 310 and an associated information storage unit 311 are realized by storage unit 360.

### [4. Process at Account Management System]

In the present embodiment, a user U001 participating in the aforementioned project designates text printing of the service. In response, the joint job service lists up the users currently working on the same project. Table 6 includes the information of user U001, user U003, user U004, user U006 and user U007, who are the users currently utilizing the service at the point in time when the printing is designated. From the information, a group of users working in project PRJ001 that is the project in which user U001 who has issued the print designation is working is picked up as the associated information. As used herein, user U001, user U004 and user U007 indicated in Table 7 are picked up. In the joint job service, the associated information is transmitted to the usage management server, and user U001 requests the list of MFPs that are currently available.

Account management server 200 (or, usage management server 100 that will be described afterwards) receives the associated information from the joint job service. Account management server 200 further reads in the customer management table indicating the permission of using MFP for each user, shown in Table 8, and the MFP management table including a list of MFPs under management, shown in Table 9.

Account management server 200 (or, usage management server 100 that will be described afterwards) generates a list of MFPs that can be used by the user, included in the associated information, from the associated information and customer management table. In this case, six MFPs are listed up from the tables of Tables 7 and 8, i.e., MFP P001 and MFP P002 that can be used by user U001, MFP P003 and MFP P004, and MFP P005 that can be used by user U004, and MFP P007 that can be used by user U007.

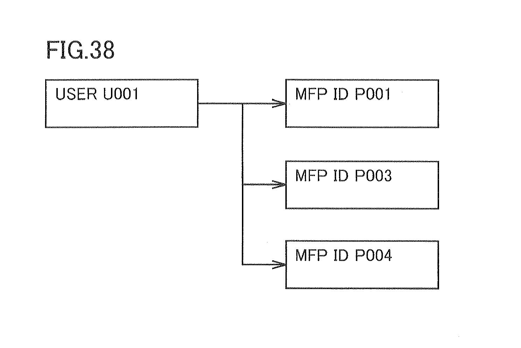

Then, information of the usage allowed department stored in MFP management table 212 is read in for the MFPs included in the list, and a determination is made as to whether usage is allowed or not for project PRJ001. Since MFP P001 and P003, and P004 are allowed for the project, the list shown in Fig. 38 is generated as the list of MFPs that can be used by user U001. Fig. 38 schematically represents a list of MFPs that can be used by the user in the present embodiment.

Then, account management server 200 (or, usage management server 100 that will be described afterwards) transmits the generated available MFP list to the joint project service operating at application server 300.

In the joint job service, available MFP list for user U001 transmitted from the usage management table is received. Based on the available MFP list, an MFP selection screen for printing is generated and presented to user U001. The relevant presentation is realized by transmitting, for example, an MFP selection screen to client terminal 400 corresponding to the IP address of the relevant user.

User U001 selects the desired MFP through the MFP selection screen. Accordingly, the information for selecting an MFP is transmitted from client terminal 400 to application server 300. The joint job service generates a print job corresponding to the MFP specified upon receiving a selected MFP by user U001, and transmits the print job to the MFP.

By the operation set forth above, a list of MFPs suitable for the status of each user can be presented. Therefore, the user can carry out printing at an appropriate MFP, without the user having to set the preferred MFP (installing a driver, or the like) for usage.

Furthermore, since user state information in real time can be used as the associated information for determination, a printed matter will not be output to a user who is not currently attending the job of the project. Accordingly, a risk in security such as the event of providing a print out to a user who is out of the office or not at his/her desk due to a conference and having the printed matter taken away by an irrelevant person can be avoided.

The aforementioned associated information does not have to be generated dynamically. In other words, the associated information can be implemented using a static table in which each project and corresponding users are recorded.

It is further advantageous to include the position information of a user such as by a GPS (Global Positioning System), the IP address of the currently used terminal, the local time, the frequency of an MFP being used, and schedule information (out of office or the time of a conference) in the associated information. For example, when one becomes aware of forgetting a printout of a material during a business trip, usage of the position information allows selection of an available MFP upon determining the current location (an MFP located in the proximity to a convenience store). By utilizing the schedule information, an MFP located at the room where a meeting is carried out can be selected as an available MFP.

Furthermore, in the case where usage allowed information is included in MFP management table 212, an MFP allowed to be used for a certain project can be selected. This is advantageous since an MFP taking into account charging can be selected automatically in the case where the account contract is separated for each project.

### [5. Process at Account Management Server]

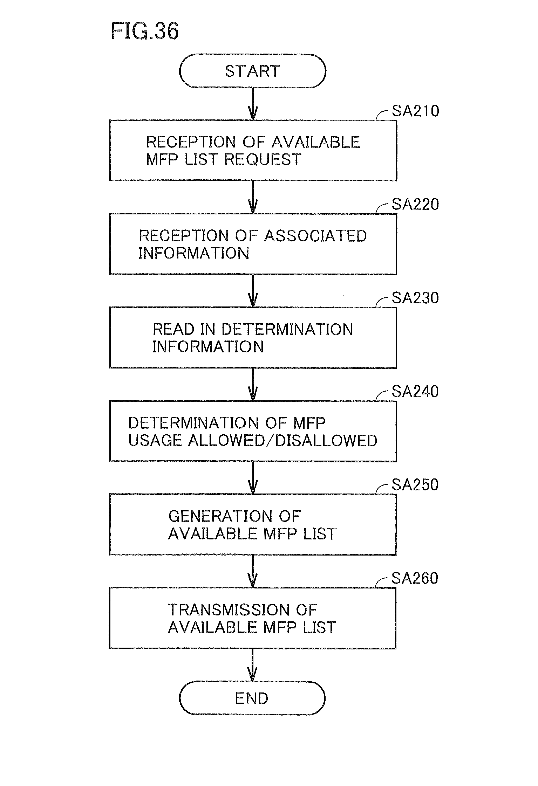

Fig. 36 is a flowchart of the process executed by account management server 200 of the present embodiment. Fig. 36 indicates only the processing up to the transmission of a list of available MFPs to application server 300, in the process described with reference to Fig. 33. The process subsequent to receiving account information from application server 300 may be similar to that set forth above.

Referring to Fig. 36, communication unit 201 requests, at step SA210, reception of an available MFP list request from application server 300 and notifies usage allowed/disallowed determination unit 210. Usage allowed/disallowed determination unit 210 transmits associated information acquiring designation to associated information acquiring unit 291.

At step SA220, associated information acquiring unit 291 receives associated information from application server 300 via communication unit 201, and stores the received associated information in associated information store 292. Then, usage allowed/disallowed determination unit 210 is notified of a process preparation being completed.

At step SA230, usage allowed/disallowed determination unit 210 obtains associated information from associated information store 292, and obtains customer information from customer management table 207A via customer management unit 206. Furthermore, MFP information is obtained from MFP management table 212.

At step SA240, usage allowed/disallowed determination unit 210 determines whether usage of each MFP is allowed or not for the customer, based on the associated information, customer information, and MFP information. The determination result is transmitted to available MFP list generation unit 211. An MFP identified as being available includes, for example, an MFP identified as being available for the relevant customer in the MFP information, and an MFP identified as being available to the project (work space) in which the relevant customer is assumed to participate in the associated information. In the present embodiment, the name of the project (work space) stored in the associated information is comparable to the user's attribute.

At step SA250, available MFP list generation unit 211 generates an available MFP list based on the transmitted determination result, and transmits the available MFP list to usage allowed/disallowed determination unit 210.

At step SA260, usage allowed/disallowed determination unit 210 transmits the available MFP list to the client terminal via communication unit 201.

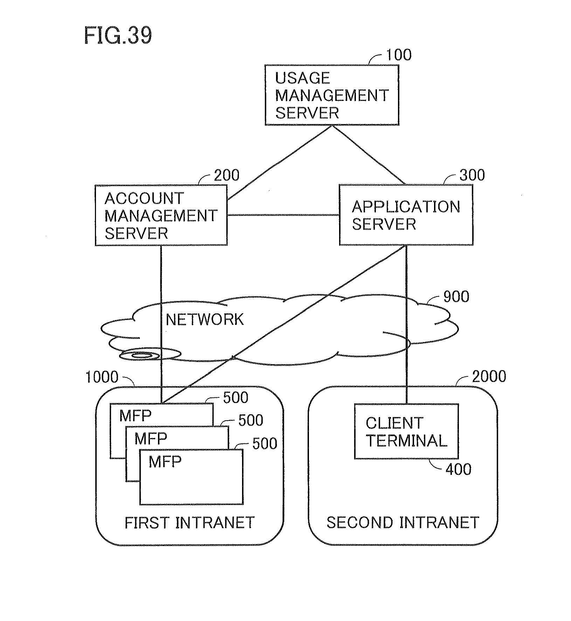

Fig. 39 schematically represents a structure of a modification of the account management system of the present embodiment. The account management system of the present embodiment may further include a usage management server 100, as shown in Fig. 39. Usage management server 100 includes an operational device such as a CPU, and a storage device storing the program that is to be executed by the relevant operational device and/or data required for execution of the relevant program. The process described with reference to Fig. 36 may be executed by the relevant usage management server. In the present modification, the process subsequent to receiving the account information is executed by account management server 200.

Although the associated information is transmitted by application server 300 in the present embodiment, the information may be transmitted directly to account management server 200 (usage management server) from the user (client terminal 400). Usage management server 100 has a block structure similar to that of account management server 200. Usage management server 100 does not have to include associated information acquiring unit 291. In other words, static associated information may be stored at associated information store 292 without using dynamic associated information.

### [6. Process of Application Server]

The process of application server 300 during application execution will be described.

Application information processing unit 302 receives a processing request from client terminal 400 via communication unit 301. Then, application information processing unit 302 performs processing according to the processing request from the client, and transmits the process result to client terminal 400 via communication unit 301. Application information processing unit 302 stores the associated information periodically in associated information storage unit 311. The processing is carried out as needed every time there is a request from client terminal 400.

In the present embodiment, the timing of generating (updating) the associated information may be: (1) when the user starts a job with the application server; or (2) when the user designates printing; or (3) on a regular basis.

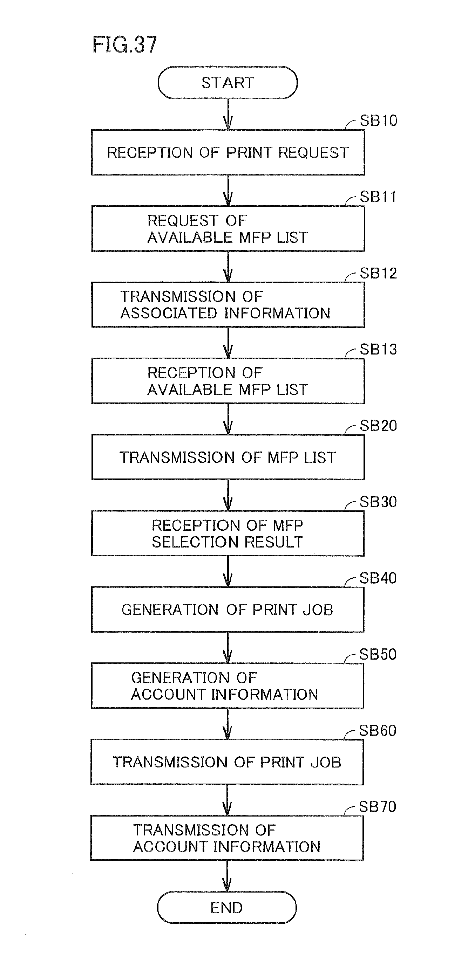

Fig. 37 is a flowchart of the process executed by application server 300 in the present embodiment. Referring to Fig. 37, the process of application server 300 for selecting an available MFP will be described.

At step SB10, application information processing unit 302 receives a print request from client terminal 400 via communication unit 301.

Then, at step SB11, application information processing unit 302 transmits a print available MFP list request to account management server 200 via communication unit 301. The timing of requesting an available MFP list may be: (1) when the user starts a job with the application server; or (2) when the user designates printing.

At step SB 12, application information processing unit 302 obtains the associated information from associated information storage unit 311, and transmits the associated information to account management server 200 via communication unit 301. The timing of transmitting the associated information to usage management server 100 may be: (1) on a regular basis (such as every 10 minutes); (2) every time the user carries out the process; (3) when the user starts a job with the application server; or (4) when the user designates printing.

At step SB13, application information processing unit 302 obtains the available MFP list from account management server 200 via communication unit 301, and stores the list in available MFP list record unit 310.

At step SB20, application information processing unit 302 reads in the available MFP list from available MFP list record unit 310, and generates a print MFP selection screen for selecting an available MFP. Application information processing unit 302 transmits the generated print MFP selection screen to client terminal 400 via communication unit 301.

At step SB30, application information processing unit 302 receives the MFP selection result (selected MFP information) from client terminal 400 via communication unit 301. Application information processing unit 302 notifies print preparation unit 304 about the print data, the client ID stored in customer information management unit 303, and the selected MFP information.

At step SB40, print preparation unit 304 transmits the print data and selected MFP information to print job generation unit 306. Print job generation unit 306 generates a print job for selected MFP 500 from the print data, based on the selected MFP information, and transmits the print job to print preparation unit 304. Print preparation unit 304 generates a print job ID for the print job, and adds the print job ID and customer ID to the print job. Print preparation unit 304 calculates the printing fee (or number of printouts) from the print job.

At SB50, print preparation unit 304 notifies account information generation unit 305 about the customer ID, print job ID, and the printing fee. Account information generation unit 305 generates account information from the customer ID, print job ID, and printing fee, and notifies print preparation unit 304 about the account information.

At step SB60, print preparation unit 304 transmits the print job to MFP 500 via communication unit 301.

At step SB70, print preparation unit 304 transmits the account information to account management server 200 via communication unit 301.

It is to be understood that the embodiments disclosed herein all are only by way of example, and not to be taken by way of limitation. The scope of the present invention is not limited by the description above, but rather by the terms of the appended claims, and is intended to include any modifications within the scope and meaning equivalent to the terms of the claims. Furthermore, each of the embodiments disclosed in the present specification is intended to be implemented individually or by a prospective combination.

### INDUSTRIAL APPLICABILITY

According to an embodiment disclosed in the present specification, an account management device generates relevant account information in response to receiving a completion notification indicating that an image formation operation is completed from an image forming device.

Accordingly, the account management device that is the charging source can charge for a service according to the actual contents of service offered by the image forming device that is the service provider.

### REFERENCE SIGNS LIST

200 account management server; 300 application server; 400 client terminal; 500 MFP.

## Claims

1. An account management system comprising an account management device (200), and an image forming device (500) connected to said account management device (200) via a network,
said image forming device (500) including:
an execution unit (555) for executing an image formation operation; and
a notification unit (554) for transmitting to said account management device (200) a completion notification indicating that the image formation operation by said execution unit (555) is completed,
said account management device (200) including:
an account management unit (202) responding to reception of said completion notification for generating account information about the image formation operation corresponding to said completion notification.

2. The account management system according to claim 1, wherein:
said completion notification includes an amount of operation about said image formation operation and information identifying a user designating said image formation operation; and
said account management device (200) generates said account information for the user identified by said completion notification.

3. The account management system according to claim 1, further comprising an application server (300) for transmitting designation of an image formation operation to said image forming device (500), wherein:
said application server (300) including a transmission unit (354) for transmitting to said account management device (200) identification information identifying an image formation operation transmitted to said image forming device (500);
said account management device (200) further including a reception unit (254) receiving said identification information; and
said account management unit (202) generates said account information on a condition that said completion notification is received from said image forming device (500) before a predetermined time has elapsed since said identification information was received from said application server (300).

4. The account management system according to claim 3, wherein said account management unit (202) responds to said reception unit (254) receiving said identification information to request said image forming device (500) to transmit said completion notification corresponding to said identification information.

5. The account management system according to claim 4, wherein said account management unit (202) requests said image forming device (500) to transmit said completion notification corresponding to said identification information on a condition that a certain time shorter than said predetermined time has elapsed since said reception unit (254) received said identification information.

6. The account management system according to claim 5, wherein:
said identification information includes information identifying a standby time; and
said account management unit (202) requests said image forming device (500) to transmit said completion notification corresponding to said identification information on a condition that said standby time has elapsed since said reception unit (254) received said identification information.

7. The account management system according to claim 3, wherein:
said image forming device (500) includes an inquiry unit (508) for inquiring, when said designation is received, said account management device (200) about validity of an image formation operation identified by said designation;
said account management device (200) includes a verification unit (209) responding to an inquiry from said inquiry unit (508) for determining validity by verifying the image formation operation identified by said designation and the identification information received from said application server (300), and transmitting a determination result to said image forming device (500); and
said execution unit (555) executes the image formation operation identified by said designation on a condition that the determination result by said verification unit (209) indicates that the image formation operation identified by said designation is valid.

8. The account management system according to claim 7, wherein:
said image forming device (500) further includes an input unit (557) for accepting input of information; and
said inquiry unit (508) request input of predetermined information at said input unit (557) when the determination result by said verification unit (209) does not indicate that the image formation operation identified by said designation is valid.

9. The account management system according to claim 1, wherein said notification unit (554) transmits said completion notification to said account management device (200) every time a predetermined number of image formation operations are completed by said execution unit (555).

10. The account management system according to claim 1, wherein said notification unit (554) transmits said completion notification to said account management device (200) at every elapse of a specified time.

11. The account management system according to claim 1, further comprising an application server (300) for accepting a request of an image formation operation from a user,
wherein said account management device (200) is configured to:
be connected to a plurality of said image forming devices (500);
store an attribute for each user;
store, for each of said image forming device (500), first information identifying a user that can use a relevant image forming device (500), and second information identifying an attribute allowing usage of the relevant image forming device (500); and
notify said application server (300) about an image forming device (500) identified as being available to a relevant user in said first information, and an image forming device (500) identified as being available to the attribute of the relevant user in said second information, as said image forming device (500) available to said user.

12. The account management system according to claim 11, wherein:
said application server (300) stores said second information; and
said account management device (200) receives said second information from said application server (300).
